# EUROPEAN PATENT APPLICATION

(11) **EP 4 707 050 A1**
(43) Date of publication of application: **11.03.2026**
(21) Application number: 25200478.3
(22) Date of filing: 05.09.2025
(51) Int. Cl.: B60L 53/30, B60L 58/26, H01M 10/6568

(54) **ELECTRIC VEHICLE**

(30) Priority: 05.09.2024 CN 202411241829
(71) Applicant: Huawei Digital Power Technologies Co., Ltd., Shenzhen, Guangdong 518043 (CN)
(72) Inventor: SONG, Jinliang, Shenzhen, Guangdong, 518043 (CN); HU, Minggui, Shenzhen, Guangdong, 518043 (CN)
(74) Representative: Maiwald GmbH

(57) **Abstract**

Embodiments of this application provide an electric vehicle.

The electric vehicle (12) includes a power battery (411), a heat exchanger (420), a coolant storage tank (430), an in-vehicle pipeline (M), a coolant injection channel (441), and a coolant discharge channel (442). The power battery (411) includes a liquid cooling runner (412). The in-vehicle pipeline (M) is configured to connect one of an in-vehicle cooling loop, an off-vehicle cooling loop, and an off-vehicle coolant supplement channel. The in-vehicle cooling loop is configured to: deliver coolant flowing out of a liquid cooling runner (412) to the heat exchanger (420), and deliver coolant flowing out of the heat exchanger (420) to the liquid cooling runner (412). The off-vehicle cooling loop is configured to: deliver, through the coolant injection channel (441), coolant provided by an off-vehicle liquid cooling device (520) to the liquid cooling runner (412), and deliver, through the coolant discharge channel (442), coolant flowing out of the liquid cooling runner (412) to the off-vehicle liquid cooling device (520), so that the off-vehicle liquid cooling device (520) dissipates heat for the power battery (411). The off-vehicle coolant supplement channel is configured to deliver, through the coolant injection channel (441), coolant provided by the off-vehicle liquid cooling device (520) to the coolant storage tank (430), to implement coolant supplement for the coolant storage tank (430) by the off-vehicle liquid cooling device (520).

## Description

### TECHNICAL FIELD

This application relates to the charging field, and more specifically, to an electric vehicle.

### BACKGROUND

With acceleration of a process of the carbon peaking and carbon neutrality strategy and increasing popularity of electric vehicles, more cities start to develop into ultra-fast charging cities. This promotes development of charging devices toward high-power ultra-fast charging devices, to achieve "one kilometer per second" quick energy supplementation for the electric vehicles, and achieve brand-new charging experience of "Charge Up While You Coffee Up".

However, as charging power provided by the charging devices to power batteries of the electric vehicles continuously increases, heat generated by the power batteries increases significantly. Consequently, temperatures of the power batteries continuously increase during high-power charging of the electric vehicles. Excessively high temperatures are prone to reducing charging efficiency and safety of the power batteries, which affects normal high-power fast charging of the electric vehicles.

### SUMMARY

This application provides an electric vehicle. The electric vehicle may dissipate heat for a power battery by using coolant provided by an off-vehicle liquid cooling device, and may further supplement coolant to a coolant storage tank by using the coolant provided by the off-vehicle liquid cooling device. This helps meet a heat dissipation requirement of the power battery during high-power fast charging, and improve charging efficiency and safety of the power battery, thereby helping prevent emergence of insufficient coolant in the coolant storage tank.

According to a first aspect, an electric vehicle is provided. The electric vehicle includes a power battery, a heat exchanger, a coolant storage tank, an in-vehicle pipeline, a coolant injection channel, and a coolant discharge channel. The power battery includes a liquid cooling runner. The coolant storage tank is configured to store coolant and provide coolant to the in-vehicle pipeline. The coolant injection channel is configured to communicate with a coolant outlet of an off-vehicle liquid cooling device. The coolant discharge channel is configured to communicate with a coolant inlet of the off-vehicle liquid cooling device. The in-vehicle pipeline is configured to connect one of an in-vehicle cooling loop, an off-vehicle cooling loop, and an off-vehicle coolant supplement channel. The in-vehicle cooling loop is configured to: deliver coolant flowing out of the liquid cooling runner to the heat exchanger, and deliver coolant flowing out of the heat exchanger to the liquid cooling runner. The off-vehicle cooling loop is configured to: deliver, through the coolant injection channel, coolant provided by the off-vehicle liquid cooling device to the liquid cooling runner, and deliver, through the coolant discharge channel, coolant flowing out of the liquid cooling runner to the off-vehicle liquid cooling device. The off-vehicle coolant supplement channel is configured to deliver, through the coolant injection channel, coolant provided by the off-vehicle liquid cooling device to the coolant storage tank.

In the electric vehicle provided in this embodiment of this application, when the electric vehicle does not perform high-power fast charging, the in-vehicle cooling loop in the in-vehicle pipeline is connected, so that the coolant can circulate between the liquid cooling runner and an internal heat exchange channel of the heat exchanger, thereby implementing heat dissipation for the power battery by the heat exchanger. When the electric vehicle performs high-power fast charging, the coolant injection channel and the coolant discharge channel communicate with the off-vehicle liquid cooling device, and the off-vehicle cooling loop in the in-vehicle pipeline is connected. In this way, the coolant provided by the off-vehicle liquid cooling device can circulate between the off-vehicle liquid cooling device and the liquid cooling runner, so that the off-vehicle liquid cooling device dissipates heat for the power battery. This helps meet a heat dissipation requirement of the power battery during high-power fast charging, and improve charging efficiency and safety of the power battery, thereby helping ensure normal high-power fast charging of the electric vehicle.

In addition, the coolant injection channel communicates with the off-vehicle liquid cooling device, and the off-vehicle coolant supplement channel in the in-vehicle pipeline is connected, so that the coolant provided by the off-vehicle liquid cooling device can flow into the coolant storage tank, thereby implementing coolant supplement for the coolant storage tank by the off-vehicle liquid cooling device. In this way, emergence of insufficient coolant in the coolant storage tank may be prevented, to ensure normal coolant supplement for the in-vehicle pipeline by the coolant storage tank, for example, to ensure normal coolant supplement for the in-vehicle cooling loop in the in-vehicle pipeline by the coolant storage tank. This further helps ensure normal heat dissipation for the power battery by the heat exchanger using the coolant output by the coolant storage tank to the in-vehicle cooling loop.

In an embodiment of this application, a coolant outlet of an internal heat exchange channel of the heat exchanger is connected to a coolant inlet of the liquid cooling runner through the coolant storage tank, or a coolant outlet of the liquid cooling runner is connected to a coolant inlet of an internal heat exchange channel of the heat exchanger through the coolant storage tank. The coolant injection channel is connected to a coolant inlet of the coolant storage tank through the liquid cooling runner, to form the off-vehicle coolant supplement channel.

Based on the foregoing design, a coolant outlet of the coolant storage tank and the coolant inlet of the coolant storage tank may be connected in series to the in-vehicle cooling loop between the liquid cooling runner and the internal heat exchange channel of the heat exchanger, so that the coolant storage tank is used as a water supply tank and a water return tank of the in-vehicle cooling loop. In this way, when the in-vehicle cooling loop is connected, the coolant stored in the coolant storage tank may circulate between the coolant storage tank, the liquid cooling runner, and the internal heat exchange channel of the heat exchanger through the coolant outlet of the coolant storage tank and the coolant inlet of the coolant storage tank, so that the heat exchanger dissipates heat for the power battery by using the coolant provided by the coolant storage tank.

In addition, the coolant inlet of the coolant storage tank is connected to the liquid cooling runner through the in-vehicle cooling loop, and the liquid cooling runner is connected to the coolant injection channel. In this way, when the coolant injection channel communicates with the off-vehicle liquid cooling device, the coolant storage tank may directly receive coolant flowing out of the coolant injection channel connected to the liquid cooling runner through the disposed coolant inlet. In other words, some pipelines in the in-vehicle cooling loop and the off-vehicle cooling loop may be used as the off-vehicle coolant supplement channel. In this way, coolant supplement for the coolant storage tank by the off-vehicle liquid cooling device can be implemented without a need to separately set a connection between a coolant supplement port of the coolant storage tank and the coolant injection channel, thereby helping reduce structural complexity of the coolant storage tank and pipeline complexity of the off-vehicle coolant supplement channel.

In an embodiment of this application, the electric vehicle further includes two three-way valves. A first valve port of one three-way valve and a second valve port of the three-way valve are configured to deliver coolant that is from the off-vehicle liquid cooling device and that is received by the coolant injection channel to a coolant inlet of the liquid cooling runner, and a first valve port of the other three-way valve and a second valve port of the other three-way valve are configured to deliver coolant flowing out of a coolant outlet of the liquid cooling runner to the coolant discharge channel. Alternatively, a third valve port of one three-way valve and a second valve port of the three-way valve are configured to deliver coolant flowing out of a coolant outlet of an internal heat exchange channel of the heat exchanger to a coolant inlet of the liquid cooling runner, and a first valve port of the other three-way valve and a third valve port of the other three-way valve are configured to deliver coolant flowing out of a coolant outlet of the liquid cooling runner to a coolant inlet of the internal heat exchange channel of the heat exchanger.

Based on the foregoing design, an opening/closing status between different valve ports of each of the two three-way valves may be adjusted to switch a flow channel of the coolant in the liquid cooling runner, so that the in-vehicle cooling loop between the liquid cooling runner and the internal heat exchange channel of the heat exchanger is connected, or the off-vehicle cooling loop between the liquid cooling runner and the coolant injection channel and between the liquid cooling runner and the coolant discharge channel is connected. In this way, the electric vehicle may dissipate heat for the power battery through the in-vehicle cooling loop, or the electric vehicle may dissipate heat for the power battery through the off-vehicle cooling loop, thereby helping meet heat dissipation requirements of the power battery in different application scenarios.

In an embodiment of this application, the third valve port of the three-way valve receives, through the coolant storage tank, the coolant flowing out of the coolant outlet of the internal heat exchange channel of the heat exchanger. A coolant outlet of the coolant storage tank is connected to the third valve port of the three-way valve, and a coolant inlet of the coolant storage tank is connected to the coolant outlet of the internal heat exchange channel of the heat exchanger. The coolant injection channel is connected to the coolant inlet of the coolant storage tank through the three-way valve, the liquid cooling runner, the other three-way valve, and the internal heat exchange channel of the heat exchanger, to form the off-vehicle coolant supplement channel.

Based on the above design, the coolant storage tank can be used as a cold water storage tank of the in-vehicle cooling loop. Coolant cooled by the heat exchanger may flow into the coolant storage tank in advance for storage. When the power battery needs heat dissipation, the coolant with a low temperature stored in the coolant storage tank may flow quickly into the liquid cooling runner, thereby improving efficiency of heat dissipation by the heat exchanger for the power battery. In addition, the opening/closing status between different valve ports of each of the two three-way valves may be adjusted to switch the flow channel of the coolant in the liquid cooling runner, and adjust a connection/disconnection status of the off-vehicle coolant supplement channel between the coolant inlet of the coolant storage tank and the coolant injection channel. In this way, the electric vehicle may not need to separately dispose a valve to adjust the connection/disconnection status of the off-vehicle coolant supplement channel, so that a quantity of used valves in the electric vehicle can be reduced, thereby facilitating cost optimization for the electric vehicle.

In an embodiment of this application, coolant flowing out of the third valve port of the other three-way valve is delivered to the coolant inlet of the internal heat exchange channel of the heat exchanger through the coolant storage tank. A coolant inlet of the coolant storage tank is connected to the third valve port of the other three-way valve, and a coolant outlet of the coolant storage tank is connected to the coolant inlet of the internal heat exchange channel of the heat exchanger. The coolant injection channel is connected to the coolant inlet of the coolant storage tank through the three-way valve, the liquid cooling runner, and the other three-way valve, to form the off-vehicle coolant supplement channel.

Based on the foregoing design, the opening/closing status between different valve ports of each of the two three-way valves may be adjusted to switch the flow channel of the coolant in the liquid cooling runner, and adjust a connection/disconnection status of the off-vehicle coolant supplement channel between the coolant inlet of the coolant storage tank and the coolant injection channel. In this way, the electric vehicle may not need to separately dispose a valve to adjust the connection/disconnection status of the off-vehicle coolant supplement channel, so that a quantity of used valves in the electric vehicle can be reduced, thereby facilitating cost optimization for the electric vehicle.

In an embodiment of this application, the electric vehicle further includes a water pump, and the water pump is connected between the third valve port of the three-way valve and the coolant outlet of the internal heat exchange channel of the heat exchanger, or the water pump is connected between the third valve port of the other three-way valve and the coolant inlet of the internal heat exchange channel of the heat exchanger. When the off-vehicle coolant supplement channel delivers, through the coolant injection channel, the coolant provided by the off-vehicle liquid cooling device to the coolant storage tank, or when the off-vehicle cooling loop delivers the coolant provided by the off-vehicle liquid cooling device to the liquid cooling runner and delivers, through the coolant discharge channel, the coolant flowing out of the liquid cooling runner to the off-vehicle liquid cooling device, the electric vehicle is configured to control the water pump to stop operating.

Based on the foregoing design, the water pump may drive the coolant output by the coolant storage tank to circulate in the in-vehicle cooling loop between the liquid cooling runner and the internal heat exchange channel of the heat exchanger, thereby implementing heat dissipation for the power battery by the heat exchanger. In addition, when the off-vehicle cooling loop is connected or the off-vehicle coolant supplement channel is connected and operating, the water pump may be controlled to stop operating, thereby helping reduce energy consumption of the electric vehicle.

In an embodiment of this application, a coolant discharge port of the coolant storage tank is configured to output coolant to a pipeline between the internal heat exchange channel of the heat exchanger and the liquid cooling runner. The electric vehicle further includes a two-way valve, and the coolant injection channel is connected to a coolant supplement port of the coolant storage tank through the two-way valve, to form the off-vehicle coolant supplement channel.

Based on the foregoing design, when the in-vehicle cooling loop is connected, the coolant output from the coolant discharge port of the coolant storage tank may circulate in the in-vehicle cooling loop, so that the heat exchanger can dissipate heat for the power battery by using the coolant provided by the coolant storage tank. In addition, the coolant supplement port of the coolant storage tank is connected to the coolant injection channel through a separately disposed two-way valve, so that the off-vehicle coolant supplement channel used to supplement coolant to the coolant storage tank in the electric vehicle, as well as the in-vehicle cooling loop and the off-vehicle cooling loop that are used to dissipate heat for the power battery in the electric vehicle are separately disposed. This can ensure that a coolant supplement process of the coolant storage tank and a heat dissipation process of the power battery are separately performed. This further helps improve reliability of coolant supplement performed by the coolant storage tank and heat dissipation performed by the power battery in the electric vehicle.

In an embodiment of this application, before the coolant injection channel is connected to the coolant outlet of the off-vehicle liquid cooling device, the coolant discharge channel communicates with the coolant inlet of the off-vehicle liquid cooling device, and the power battery starts charging, the in-vehicle pipeline is configured to connect the off-vehicle cooling loop.

Based on the foregoing design, before the power battery starts charging, the off-vehicle cooling loop in the in-vehicle pipeline may be connected. In this way, when the power battery starts charging, the coolant provided by the off-vehicle liquid cooling device may circulate in the liquid cooling runner through the off-vehicle cooling loop, so that the off-vehicle liquid cooling device dissipates heat for the power battery. This further helps meet a heat dissipation requirement for the power battery during high-power fast charging.

In an embodiment of this application, after the coolant injection channel communicates with the coolant outlet of the off-vehicle liquid cooling device, and the power battery stops charging, the in-vehicle pipeline is configured to connect the off-vehicle coolant supplement channel.

Based on the foregoing design, after the power battery stops charging, the off-vehicle coolant supplement channel in the in-vehicle pipeline may be connected, so that the off-vehicle liquid cooling device may supplement coolant to the coolant storage tank through the off-vehicle coolant supplement channel. Because the power battery stops charging, the coolant delivered by the off-vehicle liquid cooling device to the electric vehicle through the coolant injection channel may be used only to supplement coolant to the coolant storage tank. This helps improve efficiency of coolant supplement for the coolant storage tank. If coolant supplement is performed on the coolant storage tank before the power battery starts charging, in a subsequent charging process of the power battery, the coolant output by the coolant storage tank diffuses to the off-vehicle cooling loop through the liquid cooling runner, and flows into the off-vehicle liquid cooling device again through the coolant discharge channel but does not flow back to the electric vehicle. As a result, coolant in a supplemented coolant storage tank decreases. Therefore, in this embodiment of this application, coolant supplement is performed on the coolant storage tank after the power battery stops charging, so that the coolant in the supplemented coolant storage tank does not flow into the off-vehicle liquid cooling device again. This helps improve coolant supplement effect of the coolant storage tank.

In an embodiment of this application, the electric vehicle is configured to: when the coolant injection channel communicates with the coolant outlet of the off-vehicle liquid cooling device, the coolant discharge channel communicates with the coolant inlet of the off-vehicle liquid cooling device, and the off-vehicle cooling loop is connected, send at least one of the following packets: a packet indicating the off-vehicle liquid cooling device to dissipate heat for the electric vehicle, a packet indicating a desired flow rate of the coolant from the off-vehicle liquid cooling device by the electric vehicle, and a packet indicating a desired temperature of the coolant from the off-vehicle liquid cooling device by the electric vehicle.

Based on the foregoing design, the electric vehicle sends a related packet for requesting the off-vehicle liquid cooling device to provide the coolant only when it is determined that the off-vehicle cooling loop is connected. This can prevent a case in which the off-vehicle liquid cooling device has output the coolant to the electric vehicle based on the packet indication but the off-vehicle cooling loop in the electric vehicle is not successfully connected. This further helps ensure normal heat dissipation for the power battery by the electric vehicle using the coolant provided by the off-vehicle liquid cooling device.

In an embodiment of this application, the electric vehicle is configured to: when the coolant injection channel communicates with the coolant outlet of the off-vehicle liquid cooling device, and the off-vehicle coolant supplement channel is connected, send at least one of the following packets: a packet indicating the off-vehicle liquid cooling device to supplement coolant to the electric vehicle, and a packet indicating a desired capacity of the coolant from the off-vehicle liquid cooling device by the electric vehicle.

Based on the foregoing design, the electric vehicle sends a related packet for requesting the off-vehicle liquid cooling device to provide the coolant only when it is determined that the off-vehicle coolant supplement channel is connected. This can prevent a case in which the off-vehicle liquid cooling device has output the coolant to the electric vehicle based on the packet indication but the off-vehicle coolant supplement channel in the electric vehicle is not successfully connected. This further helps ensure normal coolant supplement for the coolant storage tank by the electric vehicle using the coolant provided by the off-vehicle liquid cooling device.

### BRIEF DESCRIPTION OF DRAWINGS

FIG. 1 is a diagram of a charging system according to an embodiment of this application;
FIG. 2 is a diagram of a structure of a charging system according to an embodiment of this application;
FIG. 3 is a diagram of a specific structure of an example of the charging system shown in FIG. 2 according to an embodiment of this application;
FIG. 4 is a diagram of a structure of another charging system according to an embodiment of this application;
FIG. 5 is a diagram of a specific structure of an example of the charging system shown in FIG. 4 according to an embodiment of this application;
FIG. 6 is a diagram of a heat dissipation principle of an example of a power battery in an electric vehicle shown in FIG. 5 according to an embodiment of this application;
FIG. 7 is a diagram of a heat dissipation principle of another example of a power battery in an electric vehicle shown in FIG. 5 according to an embodiment of this application;
FIG. 8 is a diagram of a coolant supplement principle of an example of a coolant storage tank in an electric vehicle shown in FIG. 5 according to an embodiment of this application; and
FIG. 9 is a diagram of a structure of still another charging system according to an embodiment of this application.

### DESCRIPTION OF EMBODIMENTS

For ease of understanding embodiments of this application, the following descriptions are provided before embodiments of this application are described.

In the descriptions of embodiments of this application, a connection may be an electrical connection, or may be a pipeline connection for circulating coolant, refrigerant, or the like. The electrical connection may be understood as that signal transmission is implemented between two electrical elements through a direct electrical connection or an indirect electrical connection. For example, that A is electrically connected to B may be understood as that A is directly electrically connected to B, or may be understood as that A is indirectly electrically connected to B through one or more other electrical elements.

In embodiments of this application, the terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In addition, in the descriptions of embodiments of this application, "a plurality of" means two or more, and "at least one" and "one or more" mean one, two, or more.

In the descriptions of embodiments of this application, unless otherwise specified, "and/or" describes only an association relationship for describing associated objects and represents that three relationships may exist. For example, A and/or B may represent the following three cases: Only A exists, both A and B exist, and only B exists.

The following describes technical solutions of this application with reference to accompanying drawings.

First, for ease of understanding the technical solutions provided in embodiments of this application, the following first describes an application scenario to which embodiments of this application are applicable.

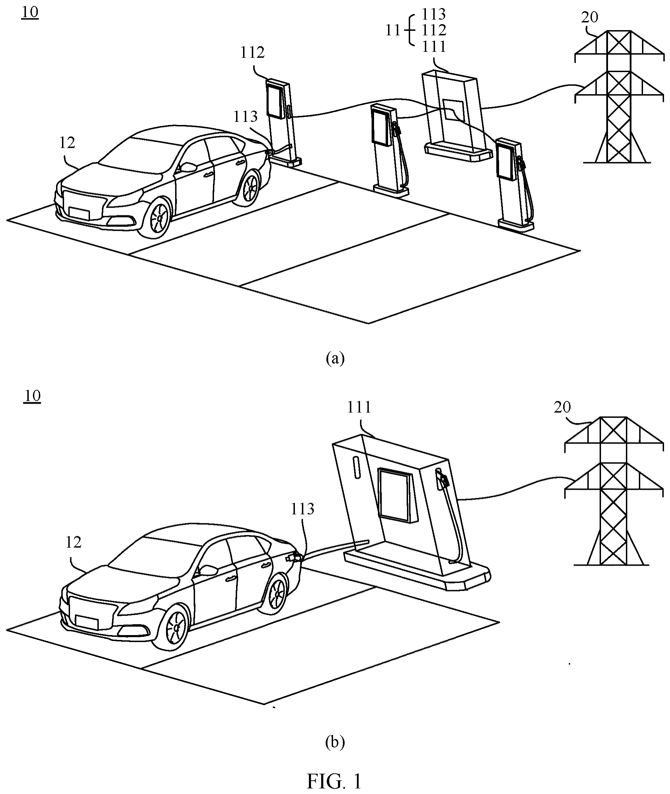

FIG. 1 is a diagram of a structure of a charging system 10 according to an embodiment of this application.

With reference to (a) and (b) in FIG. 1, the charging system 10 includes a charging device 11 and an electric vehicle 12. The charging device 11 is configured to: receive an alternating current output by a power grid 20, convert the alternating current into a stable direct current, and then deliver the stable direct current to the electric vehicle 12, to charge the electric vehicle 12. Alternatively, in some other embodiments, the electric vehicle 12 may reversely output electric energy to the power grid 20 through the charging device 11.

In some embodiments, as shown in (a) in FIG. 1, the charging device 11 is a split charging device. Specifically, the charging device 11 includes a power unit 111, one or more charging terminals 112, and one or more chargers 113. The power unit 111 includes a plurality of charging modules (not shown in the figure), and output ends of the plurality of charging modules are connected to the one or more charging terminals 112. Each charging terminal 112 is connected to at least one of the one or more chargers 113, and each charger 113 is configured to connect to the electric vehicle 12. For example, an electric vehicle 12 may be connected to one charger 113, or an electric vehicle 12 may be connected to a plurality of chargers 113.

During specific implementation, the plurality of charging modules are configured to: convert the alternating current output by the power grid 20 into the stable direct current, and then deliver the stable direct current to the charging terminal 112. The charging terminal 112 delivers the received direct current to the electric vehicle 12 through a connected charger 113.

It should be understood that, in this embodiment of this application, the plurality of charging modules include, for example, an alternating current-direct current (alternating current-direct current, AC-DC) conversion apparatus and a direct current-direct current (direct current-direct current, DC-DC) conversion apparatus. The AC-DC conversion apparatus is configured to: convert the alternating current from the power grid 20 into a direct current, and then output the direct current to the DC-DC conversion apparatus. The DC-DC conversion apparatus is configured to further convert the received direct current into a stable direct current that meets a charging requirement of the electric vehicle 12.

It should be further understood that, in this embodiment of this application, the charging terminal 112 includes a housing, a human-machine interaction interface, a charging control unit, a metering and billing unit, and the like, and is configured to perform information exchange, energy transmission, metering and billing, and the like with the electric vehicle 12.

For example, the charger 113 includes a charging cable and a charger connector. One end of the charging cable is connected to the output ends of the plurality of charging modules, the other end of the charging cable is connected to the charger connector, and the charger connector is configured to connect to a charging interface of the electric vehicle 12. In this way, a direct current output by the plurality of charging modules is delivered to the electric vehicle 12 through the charger 113.

In this embodiment of this application, the electric vehicle 12 is a means of transportation driven by electric energy. The electric vehicle 12 is a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

In some other embodiments, as shown in (b) in FIG. 1, the charging device 11 is an integrated charging device. Specifically, the human-machine interaction interface, the charging control unit, the metering and billing unit, and the like in the charging terminal 112 may be disposed in the power unit 111 together with the plurality of charging modules, for example, disposed in the housing of the power unit 111. In addition, the charger 113 is further directly connected to the power unit 111. In this way, the charging device 11 may include only the power unit 111 and the one or more chargers 113 connected to the power unit 111, and does not include the charging terminal 112.

As described in the background section, as the charging device 11 continuously evolves toward a supercharge charging device, charging power output by the plurality of charging modules to the electric vehicle 12 through the charger 113 continuously increases, to implement high-power fast charging, for example, ultra-fast charging, for a power battery of the electric vehicle 12. However, as the charging power continuously increases, heat generated by the power battery of the electric vehicle 12 increases significantly.

Although the electric vehicle 12 generally has an in-vehicle thermal management system to dissipate heat for the power battery, the in-vehicle thermal management system not only needs to provide a cooling capacity required for heat dissipation to the power battery, but also needs to provide a cooling capacity required for heat dissipation to a motor, a passenger cabin, an air conditioner, and the like in the electric vehicle 12. Therefore, the in-vehicle thermal management system can provide a limited cooling capacity to the power battery. Relying solely on the in-vehicle thermal management system to dissipate heat for the power battery cannot meet an increasing heat dissipation requirement of the power battery during high-power fast charging. Consequently, a temperature of the power battery continuously increases during high-power fast charging. This reduces charging efficiency and safety of the power battery by the charging device 11, and affects normal fast charging of the electric vehicle 12 by the charging device 11.

Therefore, heat dissipation for the power battery becomes a key issue faced when high-power fast charging of the electric vehicle 12 is implemented.

Based on the foregoing content, an embodiment of this application provides an electric vehicle. The electric vehicle includes a power battery, a heat exchanger, a coolant storage tank, an in-vehicle pipeline, a coolant injection channel, and a coolant discharge channel. The power battery includes a liquid cooling runner. The coolant storage tank is configured to store coolant and provide coolant to the in-vehicle pipeline. The coolant injection channel is configured to communicate with a coolant outlet of an off-vehicle liquid cooling device. The coolant discharge channel is configured to communicate with a coolant inlet of the off-vehicle liquid cooling device. The in-vehicle pipeline is configured to connect one of an in-vehicle cooling loop, an off-vehicle cooling loop, and an off-vehicle coolant supplement channel. The in-vehicle cooling loop is configured to: deliver coolant flowing out of the liquid cooling runner to the heat exchanger, and deliver coolant flowing out of the heat exchanger to the liquid cooling runner. The off-vehicle cooling loop is configured to: deliver, through the coolant injection channel, coolant provided by the off-vehicle liquid cooling device to the liquid cooling runner, and deliver, through the coolant discharge channel, coolant flowing out of the liquid cooling runner to the off-vehicle liquid cooling device. The off-vehicle coolant supplement channel is configured to deliver, through the coolant injection channel, coolant provided by the off-vehicle liquid cooling device to the coolant storage tank.

In the electric vehicle provided in this embodiment of this application, when the electric vehicle does not perform high-power fast charging, the in-vehicle cooling loop in the in-vehicle pipeline is connected, so that the coolant can circulate between the liquid cooling runner and an internal heat exchange channel of the heat exchanger, thereby implementing heat dissipation for the power battery by the heat exchanger. When the electric vehicle performs high-power fast charging, the coolant injection channel and the coolant discharge channel communicate with the off-vehicle liquid cooling device, and the off-vehicle cooling loop in the in-vehicle pipeline is connected. In this way, the coolant provided by the off-vehicle liquid cooling device can circulate between the off-vehicle liquid cooling device and the liquid cooling runner, so that the off-vehicle liquid cooling device dissipates heat for the power battery. This helps meet a heat dissipation requirement of the power battery during high-power fast charging, and improve charging efficiency and safety of the power battery, thereby helping ensure normal high-power fast charging of the electric vehicle.

In addition, the coolant injection channel communicates with the off-vehicle liquid cooling device, and the off-vehicle coolant supplement channel in the in-vehicle pipeline is connected, so that the coolant provided by the off-vehicle liquid cooling device can flow into the coolant storage tank, thereby implementing coolant supplement for the coolant storage tank by the off-vehicle liquid cooling device. In this way, emergence of insufficient coolant in the coolant storage tank may be prevented, to ensure normal coolant supplement for the in-vehicle pipeline by the coolant storage tank, for example, to ensure normal coolant supplement for the in-vehicle cooling loop by the coolant storage tank. This further helps ensure normal heat dissipation for the power battery by the heat exchanger using the coolant output by the coolant storage tank to the in-vehicle cooling loop.

An embodiment of this application further provides a charging pile. The charging pile may perform high-power fast charging for an electric vehicle, and provide coolant to the electric vehicle, so that the electric vehicle dissipates heat for a power battery by using the received coolant, or the electric vehicle supplements coolant to a coolant storage tank with the received coolant.

An embodiment of this application further provides a charging system. The charging system includes the electric vehicle and the charging pile described above. The following first describes the charging system provided in this embodiment of this application with reference to the accompanying drawings.

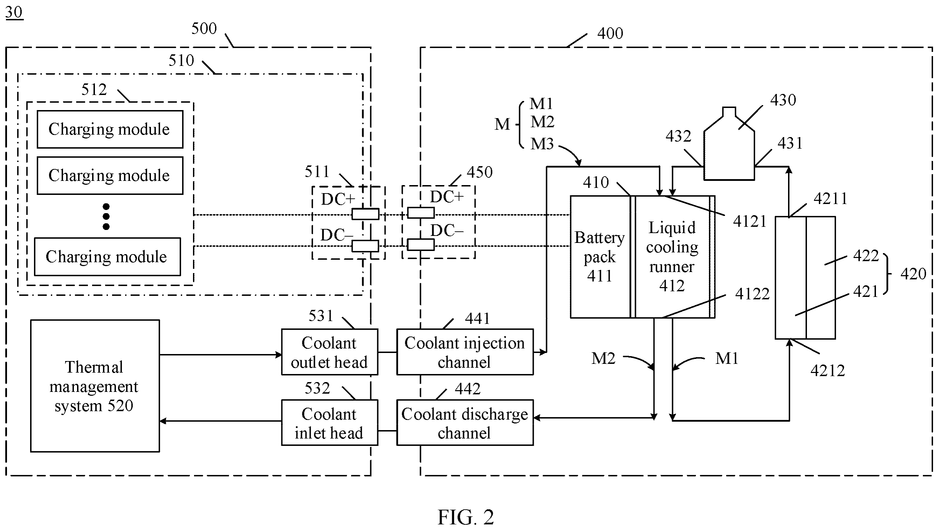

FIG. 2 is a diagram of a structure of a charging system 30 according to an embodiment of this application. It should be noted that, for ease of understanding, in FIG. 2, a dashed line represents a power transmission line, and a solid line represents a pipeline connection line for circulating coolant, refrigerant, and the like.

Refer to FIG. 2. The charging system 30 includes an electric vehicle 400 and a charging pile 500. The electric vehicle 400 includes a power battery 410. The power battery 410 includes a battery pack 411. The charging pile 500 includes a charging connector 511. The charging connector 511 is configured to output electric energy to the power battery 410, to charge the battery pack 411 in the power battery 410.

Specifically, as shown in FIG. 2, the electric vehicle 400 further includes a charging interface 450. A positive direct current socket DC+ and a negative direct current socket DC- in the charging interface 450 are configured to correspondingly connect to a positive direct current plug DC+ and a negative direct current plug DC in the charging connector 511. In addition, the positive direct current socket DC+ and the negative direct current socket DC- in the charging interface 450 are further correspondingly connected to a positive input and a negative input of the power battery 410. In addition, the charging pile 500 includes a charging device 510. The charging device 510 includes a plurality of charging modules 512 and a charger (not shown in the figure). The charging connector 511 is disposed in the charger, and the positive direct current plug DC+ and the negative direct current plug DC in the charging connector 511 are correspondingly connected to a positive output end and a negative output end of the plurality of charging modules. When the charging interface 450 is connected to the charging connector 511, a direct current output by the plurality of charging modules 512 may be delivered to the battery pack 411 in the power battery 410 through the charging connector 511 and the charging interface 450.

It should be understood that in this embodiment of this application, there may be one or more battery packs 411 in the power battery 410, and a plurality of battery packs 411 are connected in series and/or in parallel.

It should be further understood that, in this embodiment of this application, the charging device 510 may be the split charging device shown in (a) in FIG. 1, or may be the integrated charging device in (b) in FIG. (1). For specific descriptions of the charging device 510, refer to the embodiment shown in FIG. 1. Details are not described herein again.

Still refer to FIG. 2. The power battery 410 further includes a liquid cooling runner 412, and the liquid cooling runner 412 is configured to be in heat conduction contact with the battery pack 411. In this way, coolant circulating in the liquid cooling runner 412 may perform heat exchange with the battery pack 411, to absorb heat generated by the battery pack 411.

For example, the liquid cooling runner 412 may be a liquid cooling plate with a coolant runner, or an immersion heat exchanger. It should be understood that the specific structure of the liquid cooling runner 412 is merely an example. In this embodiment of this application, the liquid cooling runner 412 only needs to be capable of circulating coolant and implementing heat exchange with the battery pack 411.

Still refer to FIG. 2. The electric vehicle 400 further includes a heat exchanger 420, a coolant storage tank 430, an in-vehicle pipeline M, a coolant injection channel 441, and a coolant discharge channel 442. The coolant storage tank 430 is configured to store coolant and provide coolant to the in-vehicle pipeline M. The coolant injection channel 441 is configured to communicate with a coolant outlet of an off-vehicle liquid cooling device. The coolant discharge channel 442 is configured to communicate with a coolant inlet of the off-vehicle liquid cooling device.

In addition, the in-vehicle pipeline M is configured to selectively connect one of an in-vehicle cooling loop M1, an off-vehicle cooling loop M2, and an off-vehicle coolant supplement channel M3. The in-vehicle cooling loop M1 is configured to: deliver coolant flowing out of the liquid cooling runner 412 to the heat exchanger 420, and deliver coolant flowing out of the heat exchanger 420 to the liquid cooling runner 412. The off-vehicle cooling loop M2 is configured to: deliver, through the coolant injection channel 441, coolant provided by the off-vehicle liquid cooling device to the liquid cooling runner 412, and deliver, through the coolant discharge channel 442, coolant flowing out of the liquid cooling runner 412 to the off-vehicle liquid cooling device. The off-vehicle coolant supplement channel M3 is configured to: deliver, through the coolant injection channel 441, coolant provided by the off-vehicle liquid cooling device to the coolant storage tank 430.

It should be understood that, in this embodiment of this application, the in-vehicle pipeline M may include the in-vehicle cooling loop M1, the off-vehicle cooling loop M2, and the off-vehicle coolant supplement channel M3.

For the in-vehicle cooling loop M1, the in-vehicle cooling loop M1 may include a pipeline connected between a coolant inlet 4121 of the liquid cooling runner and a coolant outlet of the heat exchanger 420, and a pipeline connected between a coolant outlet 4122 of the liquid cooling runner and a coolant inlet of the heat exchanger 420. In this way, when the in-vehicle cooling loop M1 is connected, the liquid cooling runner 412 communicates with the heat exchanger 420, so that the coolant can circulate between the heat exchanger 420 and the liquid cooling runner 412. Therefore, after absorbing the heat generated by the battery pack 411 in the liquid cooling runner 412, the coolant may flow into the heat exchanger 420 for cooling, and cooled coolant may flow into the liquid cooling runner 412 again, to dissipate heat for the power battery 410 by the heat exchanger 420.

In an example, the heat exchanger 420 may include a first heat exchange channel 421 and a second heat exchange channel 422. A coolant outlet 4211 of the first heat exchange channel is connected to the coolant inlet 4121 of the liquid cooling runner, and a coolant inlet 4212 of the first heat exchange channel is connected to the coolant outlet 4122 of the liquid cooling runner. In other words, the in-vehicle cooling loop M1 includes a pipeline connected between the coolant inlet 4121 of the liquid cooling runner and the coolant outlet 4211 of the first heat exchange channel, and a pipeline connected between the coolant outlet 4122 of the liquid cooling runner and the coolant inlet 4212 of the first heat exchange channel. In addition, the second heat exchange channel 422 is configured to perform heat exchange with the first heat exchange channel 421, to cool coolant in the first heat exchange channel 421.

Specific descriptions of cooling the coolant in the first heat exchange channel 421 by the second heat exchange channel 422 is set forth below. Details are not described herein again.

It should be understood that, during specific implementation, the coolant circulating in the in-vehicle cooling loop M1 connected between the liquid cooling runner 412 and the first heat exchange channel 421 may be, for example, water or antifreeze of different specifications, for example, -35°C antifreeze (that is, an ethylene glycol solution with 50% concentration).

For the off-vehicle cooling loop M2, the off-vehicle cooling loop M2 may include a pipeline connected between the coolant inlet 4121 of the liquid cooling runner and the coolant injection channel 441, and a pipeline connected between the coolant outlet 4122 of the liquid cooling runner and the coolant discharge channel 442. In this way, when the coolant injection channel 441 and the coolant discharge channel 442 communicate with the off-vehicle liquid cooling device, and the off-vehicle cooling loop M2 is connected, the coolant provided by the off-vehicle liquid cooling device may circulate between the off-vehicle liquid cooling device and the liquid cooling runner 412.

For example, as shown in FIG. 2, the charging pile 500 further includes a thermal management system 520. The coolant injection channel 441 is configured to communicate with a coolant outlet of the thermal management system 520, and the coolant discharge channel 442 may be configured to communicate with a coolant inlet of the thermal management system 520. Therefore, when the coolant injection channel 441 and the coolant discharge channel 442 communicate with the thermal management system 520, and the off-vehicle cooling loop M2 is connected, coolant output from the coolant outlet of the thermal management system 520 may flow into the liquid cooling runner 412 through the coolant injection channel 441, to absorb the heat generated by the battery pack 411. The coolant that has absorbed the heat may flow out of the liquid cooling runner 412, and flow back to the thermal management system 520 through the coolant discharge channel 442 and the coolant inlet of the thermal management system 520. In this way, the thermal management system 520 dissipates heat for the power battery 410.

For example, a type of the coolant in the thermal management system 520 is the same as a type of the coolant in the electric vehicle 400, for example, both are -35°C antifreeze. This helps reduce risks of coolant deterioration and coolant pipeline blockage caused by different types of coolant in the thermal management system 520 and the electric vehicle 400.

In some embodiments, the charging pile 500 may further include a coolant outlet head 531 and a coolant inlet head 532. The coolant outlet head 531 is configured to connect to the coolant injection channel 441, and the coolant outlet head 531 is further connected to the coolant outlet of the thermal management system 520. The coolant inlet head 532 is configured to connect to the coolant discharge channel 442, and the coolant inlet head 532 is further connected to the coolant inlet of the thermal management system 520. In this way, when the coolant outlet head 531 and the coolant inlet head 532 are correspondingly connected to the coolant injection channel 441 and the coolant discharge channel 442, the thermal management system 520 may communicate with the liquid cooling runner 412 through the coolant outlet head 531 and the coolant inlet head 532.

During specific implementation, the coolant outlet head 531 and the coolant inlet head 532 may be located in the charger together with the charging connector 511. Alternatively, the charging pile 500 further includes a liquid cooling gun, and both the coolant outlet head 531 and the coolant inlet head 532 are located in the liquid cooling gun.

For the off-vehicle coolant supplement channel M3, the off-vehicle coolant supplement channel M3 may include a channel for delivering coolant from the coolant injection channel 441 to the coolant storage tank 430. For example, as shown in FIG. 2, when the coolant outlet 4211 of the first heat exchange channel of the heat exchanger 420 is connected to the coolant inlet 4121 of the liquid cooling runner through the coolant storage tank 430, the coolant injection channel 441 may be connected to a coolant inlet 431 of the coolant storage tank through the liquid cooling runner 412, to form the off-vehicle coolant supplement channel M3.

Specifically, the coolant inlet 431 of the coolant storage tank is connected to the coolant outlet 4211 of the first heat exchange channel of the heat exchanger 420, and a coolant outlet 432 of the coolant storage tank is connected to the coolant inlet 4121 of the liquid cooling runner. In this way, the coolant storage tank 430 is connected in series to the in-vehicle cooling loop M1 between the liquid cooling runner 412 and the heat exchanger 420, and therefore the coolant storage tank 430 is used as a water supply tank and a water return tank of the in-vehicle cooling loop M1. In this way, when the in-vehicle cooling loop M1 is connected, the coolant stored in the coolant storage tank 430 may circulate between the coolant storage tank 430, the liquid cooling runner 412, and the first heat exchange channel 421 through the coolant outlet 432 of the coolant storage tank and the coolant inlet 431 of the coolant storage tank, so that the heat exchanger 420 dissipates heat for the power battery 410 by using the coolant provided by the coolant storage tank 430.

In addition, the off-vehicle coolant supplement channel M3 may include a pipeline connected between the coolant injection channel 441 and the coolant inlet 4121 of the liquid cooling runner, a pipeline connected between the coolant outlet 4122 of the liquid cooling runner and the coolant inlet 4212 of the first heat exchange channel of the heat exchanger 420, and a pipeline connected between the coolant outlet 4211 of the first heat exchange channel and the coolant inlet 431 of the coolant storage tank. In other words, some pipelines in the in-vehicle cooling loop M1 and the off-vehicle cooling loop M2 may alternatively be used together as the off-vehicle coolant supplement channel M3.

In this way, as shown in FIG. 2, when the coolant injection channel 441 communicates with the off-vehicle liquid cooling device, for example, communicates with the thermal management system 520, and the off-vehicle coolant supplement channel M3 is connected, the coolant output by the thermal management system 520 may flow into the coolant storage tank 430 through the coolant injection channel 441, the liquid cooling runner 412, the first heat exchange channel 421, and the coolant inlet 431 of the coolant storage tank, to implement coolant supplement for the coolant storage tank 430.

Based on the foregoing analysis, during specific implementation, the electric vehicle 400 may connect one of the in-vehicle cooling loop M1, the off-vehicle cooling loop M2, and the off-vehicle coolant supplement channel M3 in the in-vehicle pipeline M, to meet a heat dissipation requirement of the power battery 410 or a coolant supplement requirement of the coolant storage tank 430 of the electric vehicle 400.

In an example, when the electric vehicle 400 does not perform high-power fast charging, for example, during normal driving of the electric vehicle 400 or during low-power charging of the electric vehicle 400, the power battery 410 generates a small amount of heat. In this case, the electric vehicle 400 may control the in-vehicle cooling loop M1 in the in-vehicle pipeline M to be connected, to dissipate heat for the power battery 410 through the heat exchanger 420.

In another example, when the coolant injection channel 441 and the coolant discharge channel 442 of the electric vehicle 400 communicate with the off-vehicle liquid cooling device, for example, communicate with the thermal management system 520, and the electric vehicle 400 performs high-power charging, the power battery 410 generates a large amount of heat. In this case, the electric vehicle 400 may control the off-vehicle cooling loop M2 in the in-vehicle pipeline M to be connected, to dissipate heat for the power battery 410 by using the coolant provided by the thermal management system 520. This further helps meet a heat dissipation requirement of the power battery 410 during high-power fast charging, and improve charging efficiency and safety of the power battery 410, thereby helping ensure normal high-power fast charging of the electric vehicle 400.

It should be understood that, in some solutions, the heat dissipation requirement of the power battery 410 during high-power fast charging is met by enhancing a cooling capability of the thermal management system of the electric vehicle 400 and improving a cooling capacity of the thermal management system. However, this requires rectification of an entire vehicle cooling system of the electric vehicle 400, which increases a weight and a size of the entire vehicle and increases energy consumption of the entire vehicle. In addition, when the electric vehicle 400 performs low-power fast charging, a rectification part of the entire vehicle cooling system is in an idle state, and utilization of the cooling system is low.

Therefore, in this embodiment of this application, the off-vehicle liquid cooling device is used to dissipate heat for the power battery 410 that performs high-power fast charging, for example, dissipate heat for the power battery 410 through the thermal management system 520 in the charging pile 500. This can meet the heat dissipation requirement of the power battery 410 during high-power fast charging, and reduce a degree of rectification on the entire vehicle cooling system, thereby avoiding an excessive increase in the weight and the size of the entire vehicle, and facilitating cost optimization of the electric vehicle 400.

In still another example, when the coolant injection channel 441 of the electric vehicle 400 communicates with the off-vehicle liquid cooling device, for example, the thermal management system 520, and the coolant storage tank 430 needs coolant supplement, the electric vehicle 400 may control the off-vehicle coolant supplement channel M3 in the in-vehicle pipeline M to be connected, to supplement coolant to the coolant storage tank 430 by using the coolant provided by the thermal management system 520.

In this way, emergence of insufficient coolant in the coolant storage tank 430 may be prevented, to ensure normal coolant supplement for the in-vehicle pipeline M by the coolant storage tank 430, for example, to ensure normal coolant supplement for the in-vehicle cooling loop M1 by the coolant storage tank 430. This further helps ensure normal heat dissipation for the power battery 410 by the heat exchanger 420 using the coolant output by the coolant storage tank 430 to the in-vehicle cooling loop M1. In addition, in the foregoing technical solution, because some pipelines in the in-vehicle cooling loop M1 and the off-vehicle cooling loop M2 are used together as the off-vehicle coolant supplement channel M3, the coolant storage tank 430 may directly receive the coolant flowing out of the coolant injection channel 441 through the coolant inlet 431 of the coolant storage tank connected to the in-vehicle cooling loop M1. In this way, coolant supplement for the coolant storage tank 430 by the off-vehicle liquid cooling device can be implemented without a need to separately set a connection between a coolant supplement port of the coolant storage tank 430 and the coolant injection channel 441, thereby helping reduce structural complexity of the coolant storage tank 430 and pipeline complexity of the off-vehicle coolant supplement channel M3.

It should be understood that, during actual application, as the heat exchanger 420 dissipates heat for the power battery 410 for a long time, the coolant output from the coolant outlet 432 of the coolant storage tank to the in-vehicle cooling loop M1 is continuously consumed. As a result, the coolant in the coolant storage tank 430 gradually decreases.

In addition, when the electric vehicle 400 needs to perform high-power fast charging through the charging pile 500, the liquid cooling runner 412 is switched from communicating with the heat exchanger 420 to communicating with the coolant injection channel 441 and the coolant discharge channel 442. During switching, the coolant output by the coolant storage tank 430 to the in-vehicle cooling loop M1 may flow into the off-vehicle cooling loop M2 through the liquid cooling runner 412, and further flow into the thermal management system 520 through the coolant discharge channel 442. However, when the electric vehicle 400 stops charging, the coolant injection channel 441 and the coolant discharge channel 442 of the electric vehicle 400 need to be disconnected from the thermal management system 520. As a result, the coolant flowing into the thermal management system 520 may not flow back to the electric vehicle 400. In addition, when the coolant injection channel 441 and the coolant discharge channel 442 are disconnected from the thermal management system 520, the coolant flowing from the coolant storage tank 430 to the off-vehicle cooling loop M2 may further leak from the coolant injection channel 441 or the coolant discharge channel 442.

In this way, with long-term operation and repeated charging of the electric vehicle 400, the coolant in the coolant storage tank 430 continuously decreases. Therefore, to ensure stable operation of the coolant storage tank 430, coolant supplement needs to be performed on the coolant storage tank 430 periodically. However, currently, coolant supplement of the coolant storage tank 430 needs to be performed at a designated location, such as an automotive service and sales center. As a result, when using the electric vehicle 400, a user needs to periodically detect whether the coolant storage tank 430 is short of coolant, and drives the electric vehicle 400 to a specified place for coolant supplement when the coolant storage tank 430 is short of coolant. The foregoing process of coolant supplement of the coolant storage tank 430 is complex, which affects user experience.

Therefore, in this embodiment of this application, the charging pile 500 can meet both a charging requirement and a coolant supplement requirement of the electric vehicle 400. This can reduce a need to perform coolant supplement on the coolant storage tank 430 at the designated location, thereby simplifying a coolant supplement process of the coolant storage tank 430, and improving user experience.

The foregoing describes the charging system 30 provided in embodiments of this application. The following further describes structures of the electric vehicle 400 and the charging pile 500 in the charging system 30 in detail with reference to the accompanying drawings.

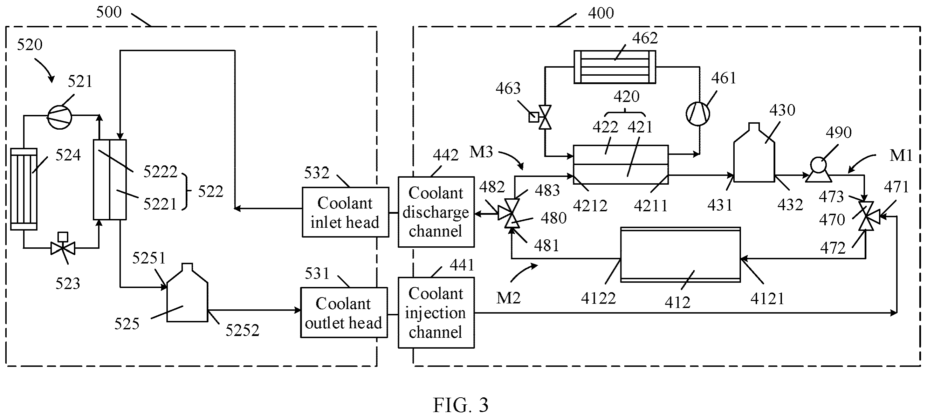

FIG. 3 is a diagram of a specific structure of an example of the charging system 30 shown in FIG. 2 according to an embodiment of this application.

Refer to FIG. 3. In some embodiments, the electric vehicle 400 further includes a compressor 461, a heat exchanger 462, and an expansion valve 463. The compressor 461, the heat exchanger 462, the expansion valve 463, and the second heat exchange channel 422 of the heat exchanger 420 are sequentially connected.

It should be understood that, during specific implementation, the compressor 461, the heat exchanger 462, the expansion valve 463, and the second heat exchange channel 422 of the heat exchanger 420 may be connected through a refrigerant pipeline. The refrigerant pipeline is a pipeline for circulating refrigerant, and the refrigerant may be, for example, freon or a liquid cooling compound.

Based on the foregoing design, when the in-vehicle cooling loop M1 is connected, the coolant output by the coolant storage tank 430 circulates between the coolant storage tank 430, the liquid cooling runner 412, and the first heat exchange channel 421 of the heat exchanger 420. When flowing in the liquid cooling runner 412, the coolant may be used to absorb heat of the battery pack 411, and then coolant that carries the heat flows into the first heat exchange channel 421. In addition, the refrigerant circulates along the compressor 461, the heat exchanger 462, the expansion valve 463, and the second heat exchange channel 422 of the heat exchanger 420, to cool the coolant flowing in the first heat exchange channel 421, and cooled coolant may flow into the liquid cooling runner 412 again. In this way, the heat exchanger 420 dissipates heat for the power battery 410.

In addition, during actual application, the cooled coolant in the first heat exchange channel 421 may flow into the coolant storage tank 430 in advance for storage. In other words, the coolant storage tank 430 is used as a cold water storage tank for the in-vehicle cooling loop M1. In this way, when the power battery 410 needs heat dissipation, the coolant with a low temperature stored in the coolant storage tank 430 may flow quickly into the liquid cooling runner 412, thereby improving efficiency of heat dissipation by the heat exchanger 420 for the power battery 410.

For example, the heat exchanger 420 is an evaporator, and the heat exchanger 462 is a condenser.

Still refer to FIG. 3. In some embodiments, to enable the electric vehicle 400 to control one of the in-vehicle cooling loop M1 and the off-vehicle cooling loop M2 in the in-vehicle pipeline M to be connected, the electric vehicle 400 further includes two three-way valves, namely, a three-way valve 470 and a three-way valve 480.

A first valve port 471 of the three-way valve 470 and a second valve port 472 of the three-way valve are configured to deliver the coolant that is from the off-vehicle liquid cooling device and that is received by the coolant injection channel 441 to the coolant inlet 4121 of the liquid cooling runner, and a first valve port 481 of the three-way valve 480 and a second valve port 482 of the three-way valve are configured to deliver the coolant flowing out of the coolant outlet 4122 of the liquid cooling runner to the coolant discharge channel 442. Alternatively, a third valve port 473 of the three-way valve 470 and the second valve port 472 of the three-way valve are configured to deliver the coolant flowing out of the coolant outlet 4211 of the first heat exchange channel to the coolant inlet 4121 of the liquid cooling runner, and the first valve port 481 of the three-way valve 480 and a third valve port 483 of the three-way valve are configured to deliver the coolant flowing out of the coolant outlet 4122 of the liquid cooling runner to the coolant inlet 4212 of the first heat exchange channel.

Specifically, for the three-way valve 470, the first valve port 471 of the three-way valve is connected to the coolant injection channel 441, the second valve port 472 of the three-way valve is connected to the coolant inlet 4121 of the liquid cooling runner, and the third valve port 473 of the three-way valve is connected to the coolant outlet 4211 of the first heat exchange channel. For the three-way valve 480, the first valve port 481 of the three-way valve is connected to the coolant outlet 4122 of the liquid cooling runner, the second valve port 482 of the three-way valve is connected to the coolant discharge channel 442, and the third valve port 483 of the three-way valve is connected to the coolant inlet 4212 of the first heat exchange channel.

Based on the foregoing design, the electric vehicle 400 may adjust an opening/closing status between different valve ports of each of the three-way valve 470 and the three-way valve 480, to switch a flow channel of the coolant in the liquid cooling runner 412, so that the in-vehicle cooling loop M1 between the liquid cooling runner 412 and the heat exchanger 420 is connected, or the off-vehicle cooling loop M2 between the liquid cooling runner 412 and the coolant injection channel 441 and the coolant discharge channel 442 is connected. For example, the electric vehicle 400 may connect a channel between the first valve port 471 of the three-way valve 470 and the second valve port 472 of the three-way valve, and a channel between the first valve port 481 of the three-way valve 480 and the second valve port 482 of the three-way valve, to connect the off-vehicle cooling loop M2. Alternatively, the electric vehicle 400 may connect a channel between the third valve port 473 of the three-way valve 470 and the second valve port 472 of the three-way valve, and a channel between the first valve port 481 of the three-way valve 480 and the third valve port 483 of the three-way valve, to connect the in-vehicle cooling loop M1. In this way, the electric vehicle 400 may dissipate heat for the power battery 410 through the in-vehicle cooling loop M1 or the off-vehicle cooling loop M2, thereby helping meet heat dissipation requirements of the power battery 410 in different application scenarios.

Still refer to FIG. 3. In some embodiments, when the coolant outlet 4211 of the first heat exchange channel of the heat exchanger 420 is connected to the coolant inlet 4121 of the liquid cooling runner through the coolant storage tank 430, the third valve port 473 of the three-way valve 470 may receive, through the coolant storage tank 430, the coolant flowing out of the coolant outlet 4211 of the first heat exchange channel of the heat exchanger 420. In other words, the third valve port 473 of the three-way valve is connected to the coolant outlet 4211 of the first heat exchange channel through the coolant storage tank 430. The coolant outlet 432 of the coolant storage tank is connected to the third valve port 473 of in the three-way valve 470, and the coolant inlet 431 of the coolant storage tank is connected to the coolant outlet 4211 of the first heat exchange channel. In addition, the coolant injection channel 441 is connected to the coolant inlet 4212 of the coolant storage tank through the three-way valve 470, the liquid cooling runner 412, the three-way valve 480, and the first heat exchange channel 421 of the heat exchanger 420, to form the off-vehicle coolant supplement channel M3.

Based on the foregoing design, the electric vehicle 400 adjusts the opening/closing status between different valve ports of each of the three-way valve 470 and the three-way valve 480, to switch the flow channel of the coolant in the liquid cooling runner 412, and adjust a connection/disconnection status of the off-vehicle coolant supplement channel between the coolant inlet 431 of the coolant storage tank and the coolant injection channel 441. For example, the electric vehicle 400 may connect the channel between the first valve port 471 of in the three-way valve 470 and the second valve port 472 of the three-way valve, and the channel between the first valve port 481 of the three-way valve 480 and the third valve port 483 of the three-way valve, to connect the off-vehicle coolant supplement channel M3. In this way, the electric vehicle 400 may not need to separately dispose a valve to adjust the connection/disconnection status of the off-vehicle coolant supplement channel M3, so that a quantity of used valves in the electric vehicle 400 can be reduced, thereby facilitating cost optimization for the electric vehicle 400.

Still refer to FIG. 3. In some embodiments, the electric vehicle 400 further includes a water pump 490. The water pump 490 is connected between the liquid cooling runner 412 and the first heat exchange channel 421 of the heat exchanger 420. For example, the water pump 490 may be connected between the coolant inlet 4121 of the liquid cooling runner and the coolant outlet 4211 of the first heat exchange channel, or the water pump 490 may be connected between the coolant outlet 4122 of the liquid cooling runner and the coolant inlet 4212 of the first heat exchange channel.

Based on the foregoing design, the water pump 490 may drive the coolant output by the coolant storage tank 430 to circulate in the in-vehicle cooling loop M1 between the liquid cooling runner 412 and the first heat exchange channel 421, to dissipate heat for the power battery 410 by the heat exchanger 420.

In an example, as shown in FIG. 3, the water pump 490 is connected between the third valve port 473 of the three-way valve 470 and the coolant outlet 4211 of the first heat exchange channel. Alternatively, the water pump 490 may be connected between the third valve port 483 of the three-way valve 480 and the coolant inlet 4212 of the first heat exchange channel.

When the off-vehicle coolant supplement channel M3 delivers, through the coolant injection channel 441, the coolant provided by the off-vehicle liquid cooling device to the coolant storage tank 430, or when the off-vehicle cooling loop M2 delivers the coolant provided by the off-vehicle liquid cooling device to the liquid cooling runner 412 and delivers, through the coolant discharge channel 442, the coolant flowing out of the liquid cooling runner 412 to the off-vehicle liquid cooling device, the electric vehicle 400 is configured to control the water pump 490 to stop operating.

It should be understood that, when the coolant injection channel 441 and the coolant discharge channel 442 of the electric vehicle 400 are not connected to the off-vehicle liquid cooling device, the water pump 490 is operating because the electric vehicle 400 may dissipate heat for the power battery 410 only by using the heat exchanger 420. However, when the coolant injection channel 441 is connected to the off-vehicle liquid cooling device, and the off-vehicle coolant supplement channel M3 is connected and operating, or when the coolant injection channel 441 and the coolant discharge channel 442 are connected to the off-vehicle liquid cooling device, and the off-vehicle cooling loop M2 is connected and operating, the coolant may not circulate in the in-vehicle cooling loop M1. Therefore, the electric vehicle 400 may control the water pump 490 to stop operating, thereby reducing energy consumption of the electric vehicle 400.

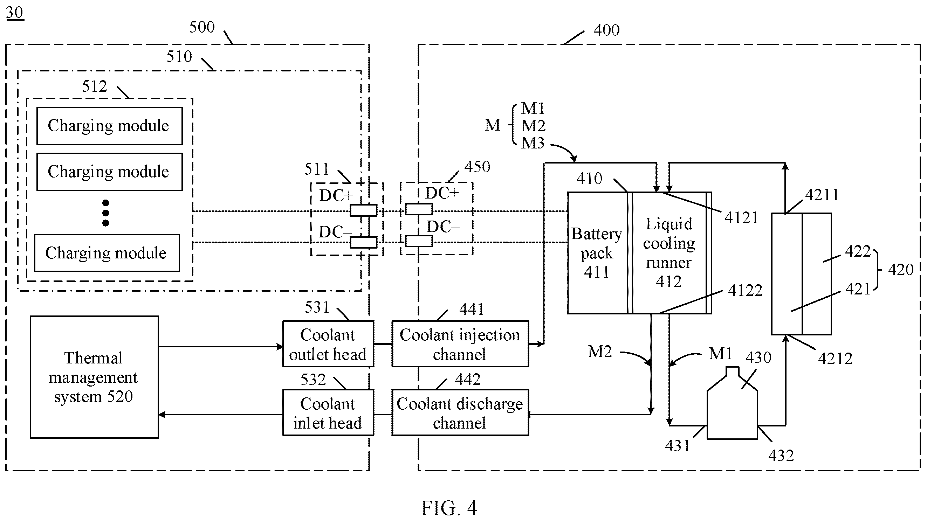

FIG. 4 is a diagram of a structure of another charging system 30 according to an embodiment of this application. It should be noted that, for ease of understanding, in FIG. 4, a dashed line represents a power transmission line, and a solid line represents a pipeline connection line for circulating coolant, refrigerant, and the like.

Unlike the configurations shown in FIG. 2 and FIG. 3, where the coolant outlet 4211 of the first heat exchange channel of the heat exchanger 420 is connected to the coolant inlet 4121 of the liquid cooling runner through the coolant storage tank 430, in the electric vehicle 400 shown in FIG. 4, the coolant outlet 4122 of the liquid cooling runner of the electric vehicle 400 is connected to the coolant inlet 4212 of the first heat exchange channel of the heat exchanger 420 through the coolant storage tank 430, and the coolant injection channel 441 is connected to the coolant inlet 431 of the coolant storage tank through the liquid cooling runner 412, to form the off-vehicle coolant supplement channel M3.

Specifically, the coolant inlet 431 of the coolant storage tank is connected to the coolant outlet 4122 of the liquid cooling runner, and the coolant outlet 432 of the coolant storage tank is connected to the coolant inlet 4212 of the first heat exchange channel of the heat exchanger 420. In this way, the coolant storage tank 430 is connected in series to the in-vehicle cooling loop M1 between the liquid cooling runner 412 and the heat exchanger 420, and the coolant storage tank 430 is used as a water supply tank and a water return tank of the in-vehicle cooling loop M1. For specific descriptions, refer to related descriptions in the embodiment shown in FIG. 2. Details are not described herein again.

In addition, the off-vehicle coolant supplement channel M3 may include a pipeline connected between the coolant injection channel 441 and the coolant inlet 4121 of the liquid cooling runner, and between the coolant outlet 4122 of the liquid cooling runner and the coolant inlet 431 of the coolant storage tank. In other words, some pipelines in the in-vehicle cooling loop M1 and the off-vehicle cooling loop M2 may alternatively be used together as the off-vehicle coolant supplement channel M3.

In this way, as shown in FIG. 4, when the coolant injection channel 441 communicates with the off-vehicle liquid cooling device, for example, communicates with the thermal management system 520, and the off-vehicle coolant supplement channel M3 is connected, the coolant output by the thermal management system 520 may flow into the coolant storage tank 430 through the coolant injection channel 441, the liquid cooling runner 412, and the coolant inlet 431 of the coolant storage tank, to implement coolant supplement for the coolant storage tank 430.

Based on the foregoing design, when the coolant storage tank 430 needs coolant supplement, the electric vehicle may control the off-vehicle coolant supplement channel M3 in the in-vehicle pipeline M to be connected, to supplement coolant to the coolant storage tank 430 by using the coolant provided by the thermal management system 520. In addition, in the foregoing technical solution, the coolant storage tank 430 may directly receive the coolant flowing out of the coolant injection channel 441 through the coolant inlet 431 of the coolant storage tank connected to the in-vehicle cooling loop M1. In this way, coolant supplement for the coolant storage tank 430 by the off-vehicle liquid cooling device can be implemented without a need to separately set a connection between a coolant supplement port of the coolant storage tank 430 and the coolant injection channel 441, thereby helping reduce structural complexity of the coolant storage tank 430 and pipeline complexity of the off-vehicle coolant supplement channel M3.

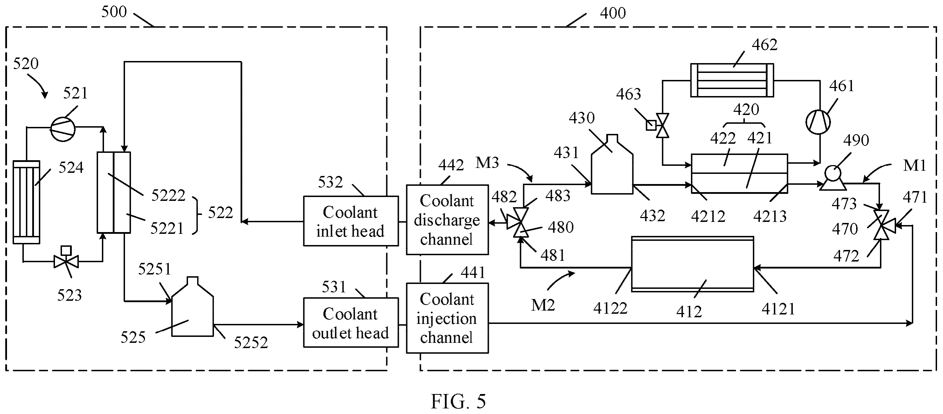

FIG. 5 is a diagram of a specific structure of an example of the charging system 30 shown in FIG. 4 according to an embodiment of this application.

Like the embodiment shown in FIG. 3, in the embodiment shown in FIG. 5, to enable the electric vehicle 400 to control one of the in-vehicle cooling loop M1 and the off-vehicle cooling loop M2 in the in-vehicle pipeline M to be connected, the electric vehicle 400 further includes the three-way valve 470 and the three-way valve 480. For a specific connection manner of the three-way valve 470 and the three-way valve 480, refer to related descriptions in the embodiment shown in FIG. 3. Details are not described herein again.

Unlike the configuration shown in FIG. 3, where the third valve port 473 of the three-way valve 470 is connected to the coolant outlet 4211 of the first heat exchange channel through the coolant storage tank 430, in the embodiment shown in FIG. 5, when the coolant outlet 4122 of the liquid cooling runner is connected to the coolant inlet 4212 of the first heat exchange channel of the heat exchanger 420 through the coolant storage tank 430, the coolant flowing out of the third valve port 483 of the three-way valve 480 is delivered to the coolant inlet 4212 of the first heat exchange channel of the heat exchanger 420 through the coolant storage tank 430. In other words, the third valve port 483 of the three-way valve is connected to the coolant inlet 4212 of the first heat exchange channel through the coolant storage tank 430.

The coolant inlet 431 of the coolant storage tank is connected to the third valve port 483 of the three-way valve 480, and the coolant outlet 432 of the coolant storage tank is connected to the coolant inlet 4212 of the first heat exchange channel. In addition, the coolant injection channel 441 is connected to the coolant inlet 4212 of the coolant storage tank through the three-way valve 470, the liquid cooling runner 412, and the three-way valve 480, to form the off-vehicle coolant supplement channel M3.

Based on the foregoing design, the electric vehicle 400 adjusts the opening/closing status between different valve ports of each of the three-way valve 470 and the three-way valve 480, to switch the flow channel of the coolant in the liquid cooling runner 412, and adjust a connection/disconnection status of the off-vehicle coolant supplement channel between the coolant inlet 431 of the coolant storage tank and the coolant injection channel 441. For example, the electric vehicle 400 may connect the channel between the first valve port 471 of the three-way valve 470 and the second valve port 472 of the three-way valve, and the channel between the first valve port 481 of the three-way valve 480 and the third valve port 483 of the three-way valve, to connect the off-vehicle coolant supplement channel M3. In this way, the electric vehicle 400 may not need to separately dispose a valve to adjust the connection/disconnection status of the off-vehicle coolant supplement channel M3, so that a quantity of used valves in the electric vehicle 400 can be reduced, thereby facilitating cost optimization for the electric vehicle 400.

It should be understood that, for descriptions of the electric vehicle 400 shown in FIG. 4 and FIG. 5 that are not provided in detail, refer to related descriptions in embodiments shown in FIG. 2 and FIG. 3. Details are not described herein again.

The foregoing describes the related structures in the electric vehicle 400. The following describes related structures in the thermal management system 520 in the charging pile 500 mentioned above with reference to the accompanying drawings.

With reference to FIG. 2 to FIG. 5, in some embodiments, the thermal management system 520 includes a compressor 521, a heat exchanger 522, an expansion valve 523, a heat exchanger 524, and a coolant storage tank 525.

The compressor 521, the heat exchanger 524, the expansion valve 523, and the heat exchanger 522 are sequentially connected. The heat exchanger 522 includes a coolant channel 5221 and a refrigerant channel 5222. The refrigerant channel 5222 is configured to perform heat exchange with the coolant channel 5221, and the refrigerant channel 5222 is connected between the compressor 521 and the expansion valve 523.

In addition, a coolant inlet of the coolant channel 5221 is used as a coolant inlet of the thermal management system 520 and is connected to a coolant inlet head 532. A coolant outlet of the coolant channel 5221 is connected to a coolant outlet head 531 through the coolant storage tank 525. Specifically, a coolant inlet 5251 of the coolant storage tank is connected to the coolant outlet of the coolant channel 5221, and a coolant outlet 5252 of the coolant storage tank is used as a coolant outlet of the thermal management system 520 and is connected to the coolant outlet head 531.

Based on the foregoing design, a refrigerant loop formed by the compressor 521, the heat exchanger 524, the expansion valve 523, and the heat exchanger 522 may cool coolant in the coolant channel 5221, and cooled coolant in the coolant channel 5221 may flow into the coolant storage tank 525 in advance for storage. In this way, when the power battery 410 of the electric vehicle 400 needs heat dissipation, the coolant stored in the coolant storage tank 525 may quickly flow into the liquid cooling runner 412 through the coolant outlet head 531 and the coolant injection channel 441, thereby improving efficiency of heat dissipation by the thermal management system 520 for the power battery 410. In addition, the coolant is stored in advance in the coolant storage tank 525. This helps ensure that the thermal management system 520 has sufficient coolant to supplement coolant to the coolant storage tank 430 of the electric vehicle 400.

The foregoing describes the specific structures of the electric vehicle 400 and the charging pile 500 in the charging system 30. The following provides, by using the charging system 30 shown in FIG. 5 as an example, an exemplary description of the process in which the electric vehicle 400 adjusts the opening/closing status between different valve ports of the three-way valve 470 and the three-way valve 480, to dissipate heat for the power battery 410 through the in-vehicle cooling loop M1 or the off-vehicle cooling loop M2.

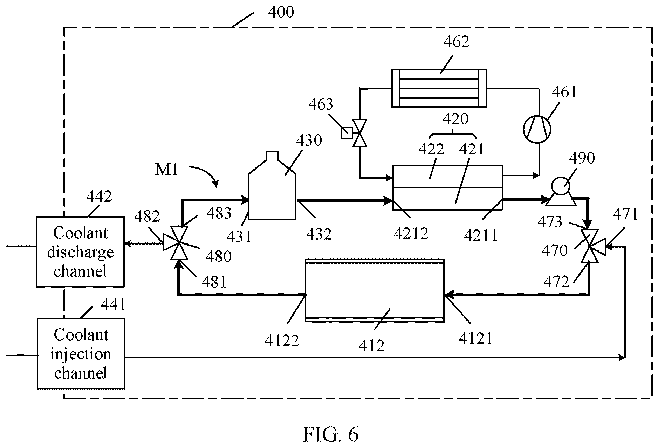

FIG. 6 is a diagram of a heat dissipation principle of an example of a power battery 410 in an electric vehicle 400 shown in FIG. 5 according to an embodiment of this application.

Refer to FIG. 6. In some embodiments, when the coolant injection channel 441 and the coolant discharge channel 442 of the electric vehicle 400 do not communicate with the off-vehicle liquid cooling device, for example, when the coolant injection channel 441 and the coolant discharge channel 442 are not connected to the coolant outlet head 531 and the coolant inlet head 532 of the charging pile 500, for example, when the electric vehicle 400 is in a normal driving process, the in-vehicle pipeline M is configured to connect the in-vehicle cooling loop M1.

Specifically, the electric vehicle 400 may control a channel between the second valve port 472 of the three-way valve 470 and the third valve port 473 of the three-way valve to be connected, and a channel between the second valve port 472 of the three-way valve and the first valve port 471 of the three-way valve to be disconnected, and further control a channel between the first valve port 481 of the three-way valve 480 and the third valve port 483 of the three-way valve to be connected, and a channel between the first valve port 481 of the three-way valve and the second valve port 482 of the three-way valve is disconnected, to connect the in-vehicle cooling loop M1.

Based on the foregoing design, the coolant may circulate between the liquid cooling runner 412 and the first heat exchange channel 421 of the heat exchanger 420 through the in-vehicle cooling loop M1, so that the heat exchanger 420 dissipates heat for the battery pack 411.

When the heat exchanger 420 dissipates heat for the power battery 410, flow directions of the coolant and the refrigerant in the electric vehicle 400 are shown by thick line arrows in FIG. 6.

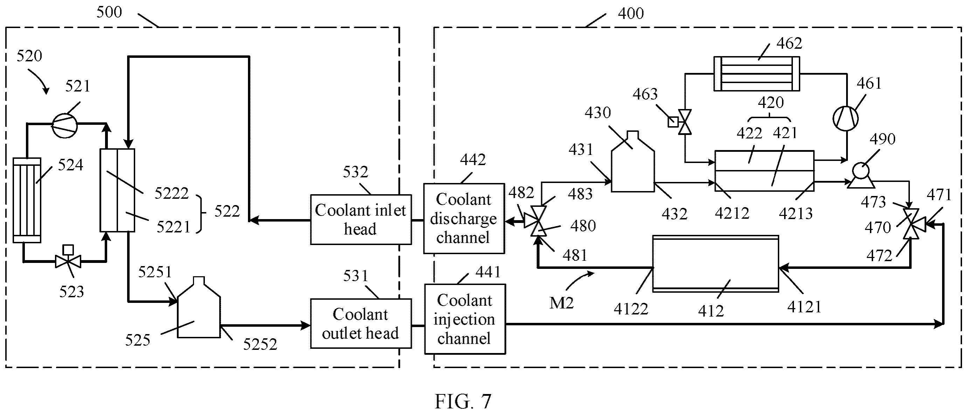

FIG. 7 is a diagram of a heat dissipation principle of another example of a battery pack 411 in an electric vehicle 400 shown in FIG. 5 according to an embodiment of this application.

Refer to FIG. 7. In some embodiments, when the coolant injection channel 441 communicates with the coolant outlet of the off-vehicle liquid cooling device, and the coolant discharge channel 442 communicates with the coolant inlet t of the off-vehicle liquid cooling device, for example, the coolant injection channel 441 and the coolant discharge channel 442 are correspondingly connected to the coolant outlet head 531 and the coolant inlet head 532 of the charging pile 500, and before the power battery 410 starts charging, the in-vehicle pipeline M is configured to connect the off-vehicle cooling loop M2.

Specifically, before the power battery 410 of the electric vehicle 400 is charged through the charging pile 500, and when it is determined that the coolant injection channel 441 and the coolant discharge channel 442 are correspondingly connected to the coolant outlet head 531 and the coolant inlet head 532, the electric vehicle 400 may control a channel between the second valve port 472 of the three-way valve 470 and the first valve port 471 of the three-way valve to be connected, and a channel between the second valve port 472 of the three-way valve and the third valve port 473 of the three-way valve to be disconnected, and further control a channel between the first valve port 481 of the three-way valve 480 and the second valve port 482 of the three-way valve to be connected, and a channel between the first valve port 481 of the three-way valve and the third valve port 483 of the three-way valve to be disconnected, to connect the off-vehicle cooling loop M2.

Based on the foregoing design, when the power battery 410 starts to perform high-power fast charging through the charging pile 500, the coolant provided by the thermal management system 520 may circulate between the thermal management system 520 and the liquid cooling runner 412 through the off-vehicle cooling loop M2, so that the thermal management system 520 dissipates heat for the power battery 410. This further helps meet a heat dissipation requirement of the power battery 410 during high-power fast charging, thereby improving efficiency and safety of charging the electric vehicle 400 by the charging pile 500.

During specific implementation, in some embodiments, the electric vehicle 400 is configured to send a heat dissipation request packet when the coolant injection channel 441 communicates with the coolant outlet of the off-vehicle liquid cooling device, the coolant discharge channel 442 communicates with the coolant inlet of the off-vehicle liquid cooling device, and the off-vehicle cooling loop M2 is connected. The heat dissipation request packet includes at least one of the following packets: a packet indicating the off-vehicle liquid cooling device to dissipate heat for the electric vehicle 400, a packet indicating a desired flow rate of the coolant from the off-vehicle liquid cooling device by the electric vehicle 400, and a packet indicating a desired temperature of the coolant from the off-vehicle liquid cooling device by the electric vehicle 400.

It should be understood that, in this embodiment of this application, the desired flow rate of the coolant is a volume of coolant provided by the off-vehicle liquid cooling device to the electric vehicle 400 in a unit time.

For example, when the coolant injection channel 441 and the coolant discharge channel 442 are connected to the thermal management system 520, the electric vehicle 400 may send the heat dissipation request packet to the charging pile 500 when the off-vehicle cooling loop M2 is connected.

Specifically, the electric vehicle 400 sends the heat dissipation request packet to the charging pile 500 when it is determined that the channel between the second valve port 472 of the three-way valve 470 and the first valve port 471 of the three-way valve is connected, the channel between the second valve port 472 of the three-way valve and the third valve port 473 of the three-way valve is disconnected, the channel between the first valve port 481 of the three-way valve 480 and the second valve port 482 of the three-way valve is connected, and the channel between the first valve port 481 of the three-way valve and the third valve port 483 of the three-way valve is disconnected.

For example, the electric vehicle 400 may send the packet to the charging pile 500 by using a battery management system (battery management system, BMS) in the electric vehicle 400. In addition, the three-way valve 470 and the three-way valve 480 may have a function of communicatively connecting to the battery management system through a controller area network (controller area network, CAN). Therefore, the three-way valve 470 and the three-way valve 480 may feed back an opening/closing status between different valve ports of the three-way valve 470 and the three-way valve 480 to the battery management system, so that after receiving the feedback, the battery management system sends the heat dissipation request packet to the charging pile 500.

It should be understood that, in this embodiment of this application, the electric vehicle 400 may directly send the heat dissipation request packet to the charging device 510 in the charging pile 500, and the charging device 510 controls the thermal management system 520 to execute content indicated by the heat dissipation request packet. Alternatively, when the thermal management system 520 is located in the liquid cooling device, the electric vehicle 400 may directly send the heat dissipation request packet to a controller in the liquid cooling device, and the controller in the liquid cooling device controls the thermal management system 520 to execute content indicated by the heat dissipation request packet. Alternatively, the electric vehicle 400 may first send the heat dissipation request packet to the charging device 510, and then the charging device 510 forwards the heat dissipation request packet to the controller in the liquid cooling device.

Correspondingly, after receiving the heat dissipation request packet sent by the electric vehicle 400, the charging pile 500 may control the thermal management system 520 to provide coolant to the electric vehicle 400 through the coolant outlet head 531, and receive, through the coolant inlet head 532, coolant output by the electric vehicle 400, to cool the received coolant. In this way, the thermal management system 520 dissipates heat for the power battery 410.

During specific implementation, the thermal management system 520 may provide, to the electric vehicle 400, coolant with the corresponding flow rate and/or the corresponding temperature based on the desired flow rate and/or the desired temperature of the coolant indicated in the heat dissipation request packet, to better meet a heat dissipation requirement of the power battery 410 during high-power fast charging.

When the thermal management system 520 of the charging pile 500 dissipates heat for the battery pack 411, flow directions of the coolant and the refrigerant in the charging pile 500 and the electric vehicle 400 are shown by thick line arrows in FIG. 7.

In the foregoing technical solution, the electric vehicle 400 sends the heat dissipation request packet for requesting the off-vehicle liquid cooling device to provide the coolant only when it is determined that the off-vehicle cooling loop M2 between the liquid cooling runner 412 and the coolant injection channel 441 and the coolant discharge channel 442 is connected. This can prevent a case in which the off-vehicle liquid cooling device has output the coolant to the electric vehicle 400 based on the packet indication but the off-vehicle cooling loop M2 in the electric vehicle 400 is not successfully connected. This further helps ensure normal heat dissipation for the power battery 410 by the electric vehicle 400 using the coolant provided by the off-vehicle liquid cooling device.

Further, when the power battery 410 stops charging, the in-vehicle pipeline M is configured to connect the in-vehicle cooling loop M1. Specifically, the electric vehicle 400 may adjust the opening/closing status between different valve ports of each of the three-way valve 470 and the three-way valve 480, to connect the in-vehicle cooling loop M1, and dissipate heat for the power battery 410 through the in-vehicle cooling loop M1. This can meet a heat dissipation requirement of the power battery 410 in a non-charging status.

The foregoing describes the specific process in which the electric vehicle 400 dissipates heat for the power battery 410 through the in-vehicle cooling loop M1 or the off-vehicle cooling loop M2 by adjusting the opening/closing status between different valve ports of the three-way valve 470 and the three-way valve 480. The following describes, still by using the charging system 30 shown in FIG. 5 as an example, a specific process in which the electric vehicle 400 supplements coolant to the coolant storage tank 430 through the off-vehicle coolant supplement channel by adjusting the opening/closing status between different valve ports of the three-way valve 470 and the three-way valve 480.

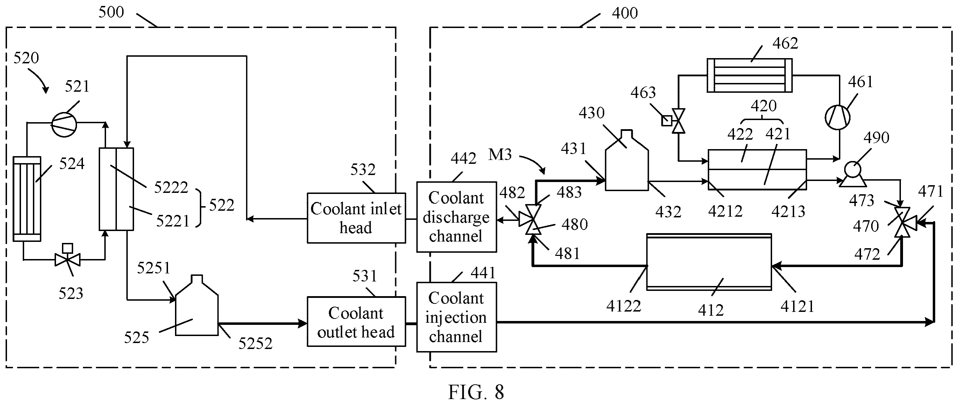

FIG. 8 is a diagram of a coolant supplement principle of an example of a coolant storage tank 430 in an electric vehicle 400 shown in FIG. 5 according to an embodiment of this application.

Refer to FIG. 8. In some embodiments, when the coolant injection channel 441 communicates with the coolant outlet of the off-vehicle liquid cooling device, for example, when the coolant injection channel 441 is connected to the coolant outlet head 531 of the charging pile 500, the in-vehicle pipeline M is configured to connect the off-vehicle coolant supplement channel M3.

Specifically, when it is determined that the coolant injection channel 441 is connected to the coolant outlet head 531, the electric vehicle 400 may determine that the coolant storage tank 430 needs coolant supplement when it is detected that a capacity of the coolant in the coolant storage tank 430 is less than a preset capacity. In this case, the electric vehicle 400 may control the channel between the second valve port 472 of the three-way valve 470 and the first valve port 471 of the three-way valve to be connected, and the channel between the second valve port 472 of the three-way valve and the third valve port 473 of the three-way valve to be disconnected, and control the channel between the first valve port 481 of the three-way valve 480 and the third valve port 483 of the three-way valve to be connected, and the channel between the first valve port 481 of the three-way valve and the second valve port 482 of the three-way valve is disconnected, to connect the off-vehicle coolant supplement channel M3.

In the foregoing technical solution, the coolant provided by the thermal management system 520 may be delivered to the coolant inlet 431 of the coolant storage tank through the coolant injection channel 441, the three-way valve 470, the liquid cooling runner 412, and the three-way valve 480, so that the thermal management system 520 supplements coolant to the coolant storage tank 430. This helps prevent emergence of insufficient coolant in the coolant storage tank 430.

During specific implementation, in some embodiments, the electric vehicle 400 is further configured to send a coolant supplement request packet to the charging pile 500 when the coolant injection channel 441 communicates with the coolant outlet of the off-vehicle liquid cooling device, and the off-vehicle coolant supplement channel is connected. The coolant supplement request packet includes at least one of the following: a packet indicating the off-vehicle liquid cooling device to supplement coolant to the electric vehicle 400, and a packet indicating a desired capacity of the coolant from the off-vehicle liquid cooling device by the electric vehicle 400.

It should be understood that, in this embodiment of this application, the desired capacity of the coolant is a total volume of coolant provided by the off-vehicle liquid cooling device to the electric vehicle 400.

For example, when the coolant injection channel 441 is connected to the thermal management system 520, the electric vehicle 400 may send the coolant supplement request packet to the charging pile 500 when the off-vehicle coolant supplement channel M3 is connected.

Specifically, the electric vehicle 400 sends the coolant supplement request packet to the charging pile 500 when it is determined that the channel between the second valve port 472 of the three-way valve 470 and the first valve port 471 of the three-way valve is connected, the channel between the second valve port 472 of the three-way valve and the third valve port 473 of the three-way valve 470 is disconnected, the channel between the first valve port 481 of the three-way valve 480 and the third valve port 483 of the three-way valve is connected, and the channel between the first valve port 481 of the three-way valve and the second valve port 482 of the three-way valve is disconnected.

For a specific manner in which the electric vehicle 400 sends the coolant supplement request packet to the charging pile 500, refer to related descriptions of the electric vehicle 400 sending the heat dissipation request packet to the charging pile 500. Details are not described herein again.

Correspondingly, after receiving the coolant supplement request packet sent by the electric vehicle 400, the charging pile 500 may control the coolant storage tank 525 to output coolant to the coolant injection channel 441 through the coolant outlet head 531, so that the thermal management system 520 supplements coolant to the coolant storage tank 430.

When the thermal management system 520 supplements coolant to the coolant storage tank 430, a flow direction of the coolant in the charging pile 500 and the electric vehicle 400 is shown by thick line arrows in FIG. 8.

In the foregoing technical solution, the electric vehicle 400 sends the coolant supplement request packet only when it is determined that the off-vehicle coolant supplement channel M3 between the coolant inlet 431 of the coolant storage tank and the coolant injection channel 441 is connected. This can prevent a case in which the off-vehicle liquid cooling device has output the coolant to the electric vehicle 400 based on the packet indication but the off-vehicle coolant supplement channel M3 in the electric vehicle 400 is not successfully connected. This further helps ensure normal coolant supplement for the coolant storage tank 430 by the electric vehicle 400 using the coolant provided by the off-vehicle liquid cooling device.

Further, in an example, if the coolant supplement request packet sent by the electric vehicle 400 includes the packet indicating the desired capacity of the coolant from the off-vehicle liquid cooling device by the electric vehicle 400, after outputting the capacity of the coolant indicated by the packet, the charging pile 500 may control the coolant storage tank 525 to stop supplementing the coolant storage tank 430.

In another example, if the coolant supplement request packet sent by the electric vehicle 400 does not include the packet indicating the desired capacity of the coolant from the off-vehicle liquid cooling device by the electric vehicle 400, when detecting that the capacity of the coolant in the coolant storage tank 430 is supplemented to be greater than or equal to a preset capacity, the electric vehicle 400 sends, to the charging pile 500, a packet indicating to stop supplementing the electric vehicle 400. Correspondingly, after receiving the packet, the charging pile 500 controls the coolant storage tank 525 to stop supplementing the coolant storage tank 430.

It should be understood that, during specific implementation, the foregoing process in which the off-vehicle liquid cooling device supplements coolant to the coolant storage tank 430 may be performed before the power battery 410 starts charging, or may be performed after the power battery 410 stops charging.

For example, in some embodiments, when the coolant injection channel 441 communicates with the coolant outlet of the off-vehicle liquid cooling device, that the in-vehicle pipeline M is configured to connect the off-vehicle coolant supplement channel M3 includes: Before the coolant injection channel 441 communicates with the coolant outlet of the off-vehicle liquid cooling device, and the power battery 410 starts charging, the in-vehicle pipeline M is configured to connect the off-vehicle coolant supplement channel M3.

Specifically, before the power battery 410 starts charging, the electric vehicle 400 may first detect a capacity of the coolant in the coolant storage tank 430 when it is determined that the coolant injection channel 441 and the coolant discharge channel 442 are correspondingly connected to the coolant outlet head 531 and the coolant inlet head 532.

If it is detected that the capacity of the coolant in the coolant storage tank 430 is greater than or equal to the preset capacity, the electric vehicle 400 determines that the coolant storage tank 430 does not need coolant supplement. In this case, the electric vehicle 400 may adjust the opening/closing status between different valve ports of the three-way valve 470 and the three-way valve 480, to connect the off-vehicle cooling loop M2, and send the heat dissipation request packet to the charging pile 500. Then, the power battery 410 starts to perform high-power fast charging through the charging pile 500, and the thermal management system 520 dissipates heat for the power battery 410. For specific descriptions, refer to the embodiment shown in FIG. 7. Details are not described herein again.

If it is detected that the capacity of the coolant in the coolant storage tank 430 is less than the preset capacity, the electric vehicle 400 determines that the coolant storage tank 430 needs coolant supplement. In this case, the electric vehicle 400 may adjust the opening/closing status between different valve ports of the three-way valve 470 and the three-way valve 480, to connect the off-vehicle coolant supplement channel M3, and send the coolant supplement request packet to the charging pile 500. Then, the coolant inlet 431 of the coolant storage tank receives the coolant from the thermal management system 520 through the coolant injection channel 441. For specific descriptions of the coolant supplement process, refer to the foregoing embodiment. Details are not described herein again.

Further, after the coolant supplement process of the coolant storage tank 430 stops, the electric vehicle 400 may adjust the opening/closing status between different valve ports of the three-way valve 470 and the three-way valve 480 again, to connect the off-vehicle cooling loop M2, and send the heat dissipation request packet to the charging pile 500. Then, the power battery 410 starts to perform high-power fast charging through the charging pile 500. For specific descriptions, refer to the embodiment shown in FIG. 7. Details are not described herein again.

In some other embodiments, when the coolant injection channel 441 communicates with the coolant outlet of the off-vehicle liquid cooling device, that the in-vehicle pipeline M is configured to connect the off-vehicle coolant supplement channel M3 includes: After the coolant injection channel 441 communicates with the coolant outlet of the off-vehicle liquid cooling device, and the power battery 410 stops charging, the in-vehicle pipeline M is configured to connect the off-vehicle coolant supplement channel M3.

Specifically, before the power battery 410 starts charging, the electric vehicle 400 may first connect the off-vehicle cooling loop M2 through the three-way valve 470 and the three-way valve 480, and send the heat dissipation request packet to the charging pile 500 when it is determined that the coolant injection channel 441 and the coolant discharge channel 442 are correspondingly connected to the coolant outlet head 531 and the coolant inlet head 532. Then, the power battery 410 starts to perform high-power fast charging through the charging pile 500, and after the power battery 410 stops charging, the electric vehicle 400 detects a capacity of the coolant in the coolant storage tank 430.

If it is detected that the capacity of the coolant in the coolant storage tank 430 is greater than or equal to the preset capacity, the electric vehicle 400 determines that the coolant storage tank 430 does not need coolant supplement. In this case, the electric vehicle 400 may connect the in-vehicle cooling loop M1 through the three-way valve 470 and the three-way valve 480, to dissipate heat for the power battery 410 through the in-vehicle cooling loop M1. This can meet a heat dissipation requirement of the power battery 410 in a non-charging status.

If it is detected that the capacity of the coolant in the coolant storage tank 430 is less than the preset capacity, the electric vehicle 400 determines that the coolant storage tank 430 needs coolant supplement. In this case, the electric vehicle 400 may connect the off-vehicle coolant supplement channel M3 through the three-way valve 470 and the three-way valve 480, and send the coolant supplement request packet to the charging pile 500. Then, the coolant storage tank 430 receives the coolant from the thermal management system 520 through the coolant injection channel 441. For specific descriptions of the coolant supplement process, refer to the foregoing embodiment. Details are not described herein again.

Further, after the coolant supplement process of the coolant storage tank 430 stops, the electric vehicle 400 may connect the in-vehicle cooling loop M1 through the three-way valve 470 and the three-way valve 480, to meet a heat dissipation requirement of the power battery 410 in a non-charging status.

In the foregoing technical solution, after the power battery 410 stops charging, the off-vehicle coolant supplement channel M3 in the in-vehicle pipeline M may be connected, so that the off-vehicle liquid cooling device may supplement coolant to the coolant storage tank 430 through the off-vehicle coolant supplement channel M3. If coolant supplement is performed on the coolant storage tank 430 in a charging process of the power battery 410, coolant delivered by the off-vehicle liquid cooling device to the electric vehicle 400 through the coolant injection channel 441 needs to be used to dissipate heat for the power battery and supplement coolant to the coolant storage tank 430. This may result in low efficiency of heat dissipation for the power battery 410 and low efficiency of coolant supplement for the coolant storage tank 430. Therefore, in this embodiment of this application, coolant supplement is performed on the coolant storage tank 430 after the power battery 410 stops charging, so that the coolant delivered by the off-vehicle liquid cooling device to the electric vehicle 400 can be used only to supplement coolant to the coolant storage tank 430. This helps improve efficiency of coolant supplement for the coolant storage tank 430.

If coolant supplement is performed on the coolant storage tank 430 before the power battery 410 starts charging, the electric vehicle 400 may first connect the in-vehicle cooling loop M1 through the three-way valve 470 and the three-way valve 480 after coolant supplement of the coolant storage tank 430, so that coolant output by a supplemented coolant storage tank 430 flows in the in-vehicle cooling loop M1. Then, when it is determined that the power battery 410 performs high-power fast charging, the electric vehicle 400 then connects the off-vehicle cooling loop M2 through the three-way valve 470 and the three-way valve 480. In this case, the coolant output by the coolant storage tank 430 diffuses to the off-vehicle cooling loop M2 through the liquid cooling runner 412, and flows into the off-vehicle liquid cooling device again through the coolant discharge channel 442 but does not flow back to the electric vehicle 400. As a result, the coolant of the supplemented coolant storage tank 430 decreases again. Therefore, in this embodiment of this application, coolant supplement is performed on the coolant storage tank 430 after the power battery 410 stops charging, so that the coolant in the supplemented coolant storage tank 430 does not flow into the off-vehicle liquid cooling device again. This helps improve coolant supplement effect of the coolant storage tank 430.

It should be understood that, in this embodiment of this application, the electric vehicle 400 may determine, based on a liquid level height of the coolant in the coolant storage tank 430, whether the capacity of the coolant in the coolant storage tank 430 is less than the preset capacity.

For example, in some embodiments, the electric vehicle 400 further includes a liquid cooling sensor (not shown in the figure). The liquid cooling sensor is located in the coolant storage tank 430, and the liquid cooling sensor is configured to detect the liquid level height of the coolant in the coolant storage tank 430. The electric vehicle 400 is further configured to: when the liquid level height of the coolant in the coolant storage tank 430 is less than a preset liquid level height, determine that the capacity of the coolant in the coolant storage tank 430 is less than the preset capacity.

During specific implementation, the liquid cooling sensor sends the detected liquid level height of the coolant in the coolant storage tank 430 to the battery management system of the electric vehicle 400. The battery management system determines, based on a relationship between the detected liquid level height and the preset liquid level height, whether the capacity of the coolant in the coolant storage tank 430 is less than the preset capacity.

For example, the liquid cooling sensor may be of a plurality of types, such as a float type, a solenoid valve type, or the like.

Based on the foregoing design, the electric vehicle 400 may determine, based on the liquid level height of the coolant in the coolant storage tank 430 that is detected by the liquid cooling sensor, whether the capacity of the coolant in the coolant storage tank 430 is less than the preset capacity. This helps improve accuracy of determining, by the electric vehicle 400, the capacity of the coolant in the coolant storage tank 430.

The following further describes another structure of the electric vehicle 400 in the charging system 30.

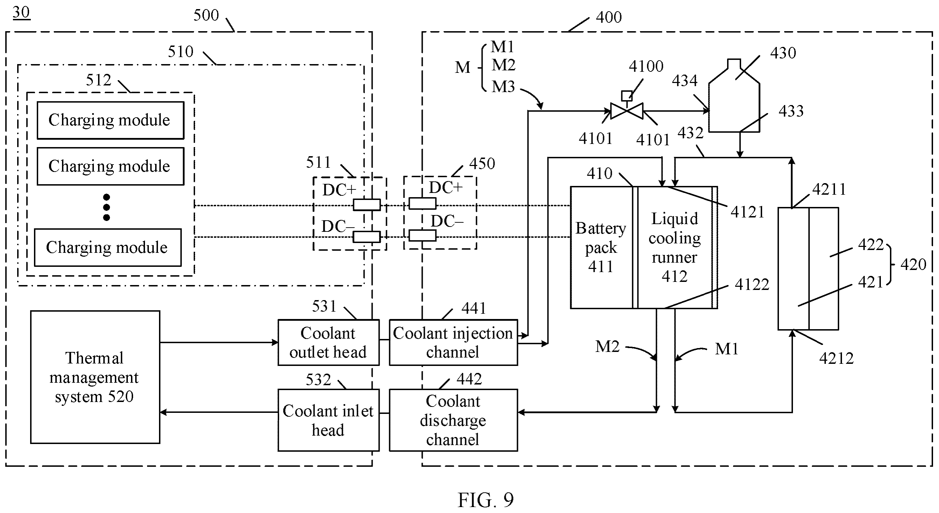

FIG. 9 is a diagram of a structure of another charging system 30 according to an embodiment of this application.

Unlike the configurations shown in FIG. 2 to FIG. 8, where some pipelines of the in-vehicle cooling loop M1 and the off-vehicle cooling loop M2 of the electric vehicle 400 are used together as the off-vehicle coolant supplement channel M3, in the embodiment shown in FIG. 9, the off-vehicle coolant supplement channel M3 between the coolant injection channel 441 and the coolant storage tank 430 is separately disposed.

Specifically, in some embodiments, as shown in FIG. 9, a coolant discharge port 433 of the coolant storage tank is configured to output coolant to a pipeline between the first heat exchange channel 421 of the heat exchanger 420 and the liquid cooling runner 412. For example, the coolant discharge port 433 of the coolant storage tank may be connected to the coolant inlet 4212 of the first heat exchange channel, or the coolant discharge port 433 of the coolant storage tank may be connected to the coolant inlet 4121 of the liquid cooling runner. In this way, when the in-vehicle cooling loop M1 is connected, the coolant output by the coolant discharge port 433 of the coolant storage tank may circulate between the liquid cooling runner 412 and the first heat exchange channel 421 through the in-vehicle cooling loop M1, so that the heat exchanger 420 dissipates heat for the power battery 410 by using the coolant provided by the coolant storage tank 430.

In addition, the electric vehicle 400 further includes a two-way valve 4100, and the coolant injection channel 441 may be connected to the coolant supplement port 434 of the coolant storage tank through the two-way valve 4100, to form the off-vehicle coolant supplement channel M3. A first valve port 4101 of the two-way valve is connected to the coolant injection channel 441, and a second valve port 4102 of the two-way valve is connected to the coolant supplement port 434 of the coolant storage tank. In other words, the off-vehicle coolant supplement channel M3 includes a pipeline connected between the coolant injection channel 441 and the first valve port 4101 of the two-way valve and a pipeline connected between the second valve port 4102 of the two-way valve and the coolant supplement port 434 of the coolant storage tank.

Based on the foregoing design, when the coolant storage tank 430 needs coolant supplement, the electric vehicle 400 may control a channel between the first valve port 4101 of the two-way valve and the second valve port 4102 of the two-way valve to be connected, to connect the off-vehicle coolant supplement channel M3. In this way, the coolant supplement port 434 of the coolant storage tank receives, through the two-way valve 4100, the coolant flowing out of the coolant injection channel 441, to supplement coolant to the coolant storage tank 430.

In addition, in the foregoing technical solution, the off-vehicle coolant supplement channel M3 used to supplement coolant to the coolant storage tank 430 in the electric vehicle 400, as well as the in-vehicle cooling loop M1 and the off-vehicle cooling loop M2 that are used to dissipate heat for the power battery 410 in the electric vehicle 400 are separately disposed. This can ensure that a coolant supplement process of the coolant storage tank 430 and a heat dissipation process of the power battery 410 are separately performed. This further helps improve reliability of coolant supplement of the coolant storage tank 430 and heat dissipation of the battery pack 411.

It should be understood that, for descriptions of the charging system 30 shown in FIG. 9 that are not provided in detail, refer to related descriptions in embodiments shown in FIG. 2 to FIG. 8. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electric vehicle, wherein the electric vehicle comprises a power battery, a heat exchanger, a coolant storage tank, an in-vehicle pipeline, a coolant injection channel, and a coolant discharge channel, the power battery comprises a liquid cooling runner, the coolant storage tank is configured to store coolant and provide coolant to the in-vehicle pipeline, the coolant injection channel is configured to communicate with a coolant outlet of an off-vehicle liquid cooling device, the coolant discharge channel is configured to communicate with a coolant inlet of the off-vehicle liquid cooling device, and the in-vehicle pipeline is configured to selectively connect one of an in-vehicle cooling loop, an off-vehicle cooling loop, and an off-vehicle coolant supplement channel, wherein
the in-vehicle cooling loop is configured to: deliver coolant flowing out of the liquid cooling runner to the heat exchanger, and deliver coolant flowing out of the heat exchanger to the liquid cooling runner;
the off-vehicle cooling loop is configured to: deliver, through the coolant injection channel, coolant provided by the off-vehicle liquid cooling device to the liquid cooling runner, and deliver, through the coolant discharge channel, coolant flowing out of the liquid cooling runner to the off-vehicle liquid cooling device; and
the off-vehicle coolant supplement channel is configured to deliver, through the coolant injection channel, coolant provided by the off-vehicle liquid cooling device to the coolant storage tank.

2. The electric vehicle according to claim 1, wherein a coolant outlet of an internal heat exchange channel of the heat exchanger is connected to a coolant inlet of the liquid cooling runner through the coolant storage tank, or a coolant outlet of the liquid cooling runner is connected to a coolant inlet of an internal heat exchange channel of the heat exchanger through the coolant storage tank; and
the coolant injection channel is connected to a coolant inlet of the coolant storage tank through the liquid cooling runner, to form the off-vehicle coolant supplement channel.

3. The electric vehicle according to claim 1, wherein the electric vehicle further comprises two three-way valves, wherein
a first valve port of one of the three-way valves and a second valve port of the three-way valve are configured to deliver coolant that is from the off-vehicle liquid cooling device and that is received by the coolant injection channel to a coolant inlet of the liquid cooling runner, and a first valve port of the other of the three-way valves and a second valve port of the other three-way valve are configured to deliver coolant flowing out of a coolant outlet of the liquid cooling runner to the coolant discharge channel; or
a third valve port of the three-way valve and a second valve port of the three-way valve are configured to deliver coolant flowing out of a coolant outlet of an internal heat exchange channel of the heat exchanger to a coolant inlet of the liquid cooling runner, and a first valve port of the other three-way valve and a third valve port of the other three-way valve are configured to deliver coolant flowing out of a coolant outlet of the liquid cooling runner to a coolant inlet of the internal heat exchange channel of the heat exchanger.

4. The electric vehicle according to claim 3, wherein the third valve port of the three-way valve receives, through the coolant storage tank, the coolant flowing out of the coolant outlet of the internal heat exchange channel of the heat exchanger, wherein
a coolant outlet of the coolant storage tank is connected to the third valve port of the three-way valve, and a coolant inlet of the coolant storage tank is connected to the coolant outlet of the internal heat exchange channel of the heat exchanger; and
the coolant injection channel is connected to the coolant inlet of the coolant storage tank through the three-way valve, the liquid cooling runner, the other three-way valve, and the internal heat exchange channel of the heat exchanger, to form the off-vehicle coolant supplement channel.

5. The electric vehicle according to claim 3, wherein coolant flowing out of the third valve port of the other three-way valve is delivered to the coolant inlet of the internal heat exchange channel of the heat exchanger through the coolant storage tank, wherein
a coolant inlet of the coolant storage tank is connected to the third valve port of the other three-way valve, and a coolant outlet of the coolant storage tank is connected to the coolant inlet of the internal heat exchange channel of the heat exchanger; and
the coolant injection channel is connected to the coolant inlet of the coolant storage tank through the three-way valve, the liquid cooling runner, and the other three-way valve, to form the off-vehicle coolant supplement channel.

6. The electric vehicle according to any one of claims 3 to 5, wherein the electric vehicle further comprises a water pump, and the water pump is connected between the third valve port of the three-way valve and the coolant outlet of the internal heat exchange channel of the heat exchanger, or the water pump is connected between the third valve port of the other three-way valve and the coolant inlet of the internal heat exchange channel of the heat exchanger; and
when the off-vehicle coolant supplement channel delivers, through the coolant injection channel, the coolant provided by the off-vehicle liquid cooling device to the coolant storage tank, the electric vehicle is configured to control the water pump to stop operating.

7. The electric vehicle according to claim 1 or 3, wherein a coolant discharge port of the coolant storage tank is configured to output coolant to a pipeline between the internal heat exchange channel of the heat exchanger and the liquid cooling runner; and
the electric vehicle further comprises a two-way valve, and the coolant injection channel is connected to a coolant supplement port of the coolant storage tank through the two-way valve to form the off-vehicle coolant supplement channel.

8. The electric vehicle according to any one of claims 1 to 7, wherein before the coolant injection channel communicates with the coolant outlet of the off-vehicle liquid cooling device, the coolant discharge channel communicates with the coolant inlet of the off-vehicle liquid cooling device, and the power battery starts charging, the in-vehicle pipeline is configured to connect the off-vehicle cooling loop.

9. The electric vehicle according to any one of claims 1 to 8, wherein after the coolant injection channel communicates with the coolant outlet of the off-vehicle liquid cooling device, and the power battery stops charging, the in-vehicle pipeline is configured to connect the off-vehicle coolant supplement channel.

10. The electric vehicle according to any one of claims 1 to 9, wherein the electric vehicle is configured to: when the coolant injection channel communicates with the coolant outlet of the off-vehicle liquid cooling device, the coolant discharge channel communicates with the coolant inlet of the off-vehicle liquid cooling device, and the off-vehicle cooling loop is connected, send at least one of the following packets:
a packet indicating the off-vehicle liquid cooling device to dissipate heat for the electric vehicle, a packet indicating a desired flow rate of the coolant from the off-vehicle liquid cooling device by the electric vehicle, and a packet indicating a desired temperature of coolant from the off-vehicle liquid cooling device by the electric vehicle.

11. The electric vehicle according to any one of claims 1 to 10, wherein the electric vehicle is configured to: when the coolant injection channel communicates with the coolant outlet of the off-vehicle liquid cooling device, and the off-vehicle coolant supplement channel is connected, send at least one of the following packets
a packet indicating the off-vehicle liquid cooling device to supplement coolant to the electric vehicle, and a packet indicating a desired capacity of the coolant from the off-vehicle liquid cooling device by the electric vehicle.
